(19) Europäisches Patentamt / European Patent Office / Office européen des brevets

(11) **EP 3 115 889 A1**

(12) **EUROPEAN PATENT APPLICATION**

(43) Date of publication:
**11.01.2017 Bulletin 2017/02**

(51) Int Cl.:
***G06F 9/445*** *(2006.01)*

(21) Application number: **16176613.4**

(22) Date of filing: **28.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.07.2015 JP 2015137762**

(71) Applicant: **FUJITSU LIMITED**
**211-8588 Kanagawa (JP)**

(72) Inventor: **Yamazaki, Masanori**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **UPDATE CONTROL PROGRAM AND APPARATUS**

(57) A program for controlling an update of a communication device that causes a computer to execute a process including: determining, when acquiring an update request including information to identify a communication device, whether or not the communication device acquires predetermined information by referring to a device information management table that manages information configured to identify the communication device that executes a predetermine function; specifying another communication device, which becomes an alternative of the communication device that executes the update, based on the function and position information of the another communication device which are included in the device information management table; making a setting so as to acquire the predetermined information from the another communication device that becomes the specified alternative; and executing the update with respect to the communication device that executes the update in accordance with the update request.

FIG. 2

1, 100, 120, 130

2, 102, 122, 132 GLOBAL DEVICE MANAGEMENT APPARATUS

4, 104, 124, 134 GW DEVICE

6, 126 END DEVICE

EP 3 115 889 A1

**EP 3 115 889 A1**

**Description**

FIELD

The embodiments discussed herein are related to a program and an apparatus for controlling an update of a communication device.

BACKGROUND

In the related art, there is disclosed a technology in which a management site server apparatus transmits the latest firmware to a network relay device in correspondence with a communication speed, the network relay device acquires firmware information and a usage situation of a peripheral device, and transmits the latest firmware information to the peripheral device in accordance with the usage situation (Japanese Laid-open Patent Publication No. 2004-234056). In addition, in the related art, the network relay device automatically updates the firmware of the peripheral device.

In addition, there is disclosed a technology of selecting a device that satisfies a user request (Japanese Laid-open Patent Publication No. 2014-71907). In this technology, data, which specifies a user device group including a plurality of end user devices, is stored in a portal aggregator. In addition, when the portal aggregator receives a request from a user, the portal aggregator creates a list of end user devices, which are capable of satisfying the user request, from the device group. Then, the portal aggregator selects an end user device from the list of the end user devices capable of being coped with, and transmits a command, which is configured to satisfy the request, to the end user device that is selected.

However, in a case of updating a device that provides a function for service realization, it is desirable for the providing of the function not to be stopped. With regard to this, in a case of using the related art, it is desirable to satisfy a precondition in which respective devices have regular connection properties by the data communication network.

In one aspect, an object of the disclosed embodiment is to perform the updating of the device without stopping the providing of the function.

SUMMARY

According to an aspect of the invention, a program for controlling an update of a communication device that causes a computer to execute a process including: determining, when acquiring an update request including information to identify a communication device, whether or not the communication device acquires predetermined information by referring to a device information management table that manages information configured to identify the communication device that executes a predetermine function; specifying another communication device, which becomes an alternative of the communication device that executes the update, based on the function and position information of the another communication device which are included in the device information management table; making a setting so as to acquire the predetermined information from the another communication device that becomes the specified alternative; and executing the update with respect to the communication device that executes the update in accordance with the update request.

BRIEF DESCRIPTION OF DRAWINGS

FIG. 1 is a diagram illustrating an example of a configuration of a service using an IoT device;
FIG. 2 is a schematic diagram illustrating a configuration of an update system according to this embodiment;
FIG. 3 is a functional block diagram illustrating a functional configuration of a global device management apparatus according to a first embodiment;
FIG. 4 is a diagram illustrating an example of a GW device list;
FIG. 5 is a diagram illustrating an example of an end device list;
FIG. 6 is a functional block diagram illustrating a functional configuration of a GW device according to the first embodiment;
FIG. 7 is a diagram illustrating an example of a management device list;
FIG. 8 is a diagram illustrating an example of a circle in which a communication available range centering around a position of the GW device is set as a radius;
FIG. 9 is a functional block diagram illustrating a functional configuration of an end device according to the first embodiment;

2

FIG. 10 is a block diagram illustrating a schematic configuration of a computer that functions as the global device management apparatus according to this embodiment;

FIG. 11 is a block diagram illustrating a schematic configuration of a computer that functions as the GW device according to this embodiment;

FIG. 12 is a block diagram illustrating a schematic configuration of a computer that functions as an end device according to this embodiment;

FIG. 13 is a flowchart illustrating an example of an information management process in the global device management apparatus according to the first embodiment;

FIG. 14 is a flowchart illustrating an example of an alternative search process in the global device management apparatus according to the first embodiment;

FIG. 15 is a flowchart illustrating an example of an update determination process in the GW device according to the first embodiment;

FIG. 16 is a flowchart illustrating an example of the update determination process in the GW device according to the first embodiment;

FIG. 17 is a flowchart illustrating an example of a process of determining whether or not update execution is possible in the GW device according to the first embodiment;

FIG. 18 is a flowchart illustrating an example of a determination process as an out of communication available range in the GW device according to the first embodiment;

FIG. 19 is a flowchart illustrating an example of an alternative search process in the GW device according to the first embodiment;

FIG. 20 is a flowchart illustrating an example of an information management process in the GW device according to the first embodiment;

FIG. 21 is a flowchart illustrating an example of the information management process in the GW device according to the first embodiment;

FIG. 22 is a flowchart illustrating an example of an update process in the end device according to the first embodiment;

FIG. 23 is a functional block diagram illustrating a functional configuration of a global device management apparatus according to a second embodiment;

FIG. 24 is a diagram illustrating an example of an update object list;

FIG. 25 is a functional block diagram illustrating a functional configuration of a GW device according to a second embodiment;

FIG. 26 is a flowchart illustrating an example of an update request process in the global device management apparatus according to the second embodiment;

FIG. 27 is a flowchart illustrating an example of an update determination process in the GW device according to the second embodiment;

FIG. 28 is a functional block diagram illustrating a functional configuration of a global device management apparatus according to a third embodiment;

FIG. 29 is a diagram illustrating an example in which a GW device that becomes an update object is determined as a device in which an update is difficult in the third embodiment;

FIG. 30 is a functional block diagram illustrating a functional configuration of the GW device according to the third embodiment;

FIG. 31 is a functional block diagram illustrating a functional configuration of an end device according to the third embodiment;

FIG. 32 is a flowchart illustrating an example of an alternative search process in the global device management apparatus according to the third embodiment;

FIG. 33 is a flowchart illustrating an example of an information management process in the global device management apparatus according to the third embodiment;

FIG. 34 is a flowchart illustrating an example of an update process in the GW device according to the third embodiment;

FIG. 35 is a flowchart illustrating an example of a process of determining whether or not update execution is possible in the GW device according to the third embodiment;

FIG. 36 is a functional block diagram illustrating a functional configuration of a global device management apparatus according to a fourth embodiment;

FIG. 37 is a diagram illustrating an example of an update object list;

FIG. 38 is a functional block diagram illustrating a functional configuration of a GW device according to the fourth embodiment;

FIG. 39 is a flowchart illustrating an example of an update request process in the global device management apparatus according to the fourth embodiment; and

FIG. 40 is a flowchart illustrating an example of an update process in the GW device according to the fourth embodiment.

DESCRIPTION OF EMBODIMENTS

Hereinafter, description will be given of embodiments related to technologies to be disclosed.

First, description will be given of a summary of this embodiment.

Recently, a personal computer (PC), a server, a smart device, and various things are connected to the Internet, and thus an internet of things (IoT) has attracted attention. Furthermore, examples of an IoT device include household electric appliances, an environment sensor, a vehicle, and the like.

In addition, a new service is provided by mutually connecting various IoT devices. For example, there is a service that is provided by connecting the IoT devices are connected to a cloud through the Internet. In addition, there is a service that is provided by connecting the IoT devices through peer to peer (P2P)/machine to machine (M2M) connection and the like in accordance with Wi-Fi Direct (registered trademark) or Bluetooth (registered trademark).

Furthermore, in the service by the IoT, a service provider and an owner of a device are different from each other, and thus there is a demand for a secure environment. Specific example of the secure environment include execution of an update by using firmware (FW) or software (SW) that becomes valid update information (validity of FW or SW is required), conformity to a security update on which the latest security version reflects, and the like.

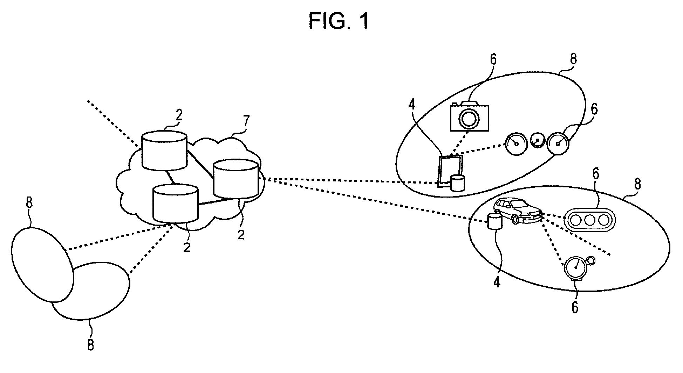

FIG. 1 illustrates an example of a configuration of a service using the IoT device. As illustrated in FIG. 1, in the service using the IoT device, a global device management apparatus 2 exists in a cloud region 7, and a GW device (gateway device) 4 and an end device 6 exists in each IoT region 8.

Here, the GW device 4 is a device that is connected to the cloud region 7 through the Internet, and is a device that includes device management information and provides a function for service realization.

In addition, the end device 6 is a device that provides a function for service realization, and is connected to the GW device 4. In addition, the global device management apparatus 2 is an apparatus that provides a service by using each piece of information, which is acquired through the GW device 4, of the end device 6. Furthermore, examples of the function, which is provided by the end device 6, include providing of information relating to an operation amount of a wiper in a case where the end device 6 is the wiper of a vehicle, and providing of information relating to the amount of power generation in a solar panel in a case where the end device 6 is the solar panel.

In the service using the IoT device, it is difficult to simultaneously update the entirety of devices which are objects during update release of FW or SW. As the reason, it can be considered that the number of the devices which becomes an object is great, a local link between the devices is narrow, and there is no guarantee that the devices are continuously connected to the Internet.

In addition, during an update of each of the devices, there is a possibility that it is difficult to use a function of the device due to reactivation of the device, and the like. In addition, it can be considered that the function of the device during an update is replaced by a different device. However, there is a possibility that a device that replaces the function may move and get out of a communication available range with the GW device 4. In this case, providing of the function from the device is paused, and thus there is a possibility that the service using the IoT device may be stopped. Accordingly, it is desirable for an update of the device to be systematically performed in order for the service using the IoT device not to be stopped.

It is considered that states of respective devices are managed collectively in the cloud region 7 so as to systematically perform an update of the devices. However, the states of the device may vary, it is difficult to grasp the states of the entirety of the devices collectively in the cloud region 7.

According to this, if using a method in which FW or SW in the IoT device is locally and individually updated by using a USB memory and the like, in a case where a plurality of the IoT devices exist, it is difficult to cope with the entirety of the IoT devices.

In addition, as an automatic update through a network, if using a method in which a device itself periodically confirms whether or not an update is present, and automatically performs an update if the update is present, since a systematic update may not be performed, and thus there is a possibility that service of the IoT device may be stopped.

Accordingly, in update of the IoT device in this embodiment, an alternative device of a device that becomes an update object is selected, and switching into the alternative device is performed during an update of the device that is an update object so as to provide a function.

In addition, the alternative device is also moved. Accordingly, if the alternative device gets out of a communication available range with the GW device 4 during an update of an update object device, it is difficult to avoid stopping of the service. According to this, a device, which does not get out of the communication available range during an update of the update object device, is selected as the alternative device. As a result, it is possible to avoid stopping of the service during an update of a device that becomes the update object. Furthermore, the alternative device represents a device that has substantially the same function as that of the device that becomes the update object.

Hereinafter, this embodiment will be described in detail with reference to the accompanying drawings. In addition, as a specific example to which the disclosure is applicable, for example, a case where a driver who drives a vehicle wants to know a temperature at a site during travelling is assumed. Typically, an in-vehicle ambient temperature sensor is used. However, in a case where it is difficult to use a sensor function during an update of a program related to the ambient temperature sensor, data is obtained from another invehicle sensor, an out-of-vehicle temperature sensor that is provided along the road, and the like instead of the above-described in-vehicle sensor, and thus it is possible to perform a program update of the in-vehicle ambient temperature sensor while avoiding stopping of the service.

First, a first embodiment will be described. In the first embodiment, description will be given of a case where an end device becomes an update object. Furthermore, in the following first to fourth embodiments, description will be given of a case where FW is updated, but SW may be updated.

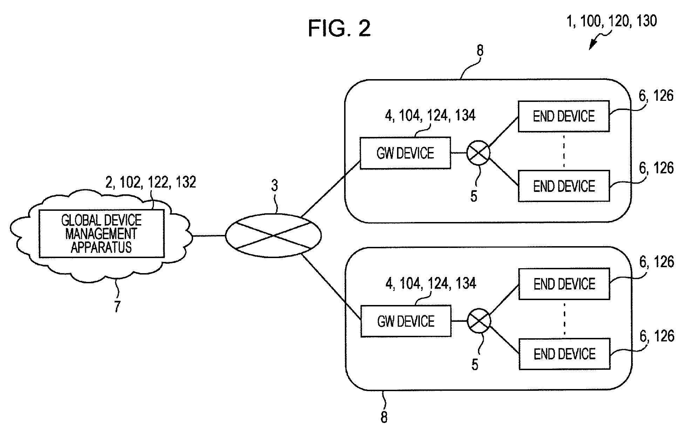

FIG. 2 is an example of an update system 1 of the first embodiment. As illustrated in FIG. 2, the update system 1 includes the global device management apparatus 2, the GW device 4, and the end device 6. Furthermore, the global device management apparatus 2 exists in the cloud region 7. In addition, the GW device 4 and the end device 6 exist in the IoT region 8. Here, in the first embodiment, description will be made on the assumption that one GW device 4 exist in one IoT region 8.

The global device management apparatus 2 according to the first embodiment is connected to the GW device 4 through a network 3 such as the Internet in a communication available manner.

In addition, the end device 6 according to the first embodiment is connected to the GW device 4 through a private network 5 of the GW device 4 in the IoT region 8, in which the end device 6 exists, in a communication available manner.

Furthermore, the number of the global device management apparatus 2, the GW device 4, and the end device 6, which are included in the update system 1 of this embodiment, is not limited to the example illustrated in FIG. 2.

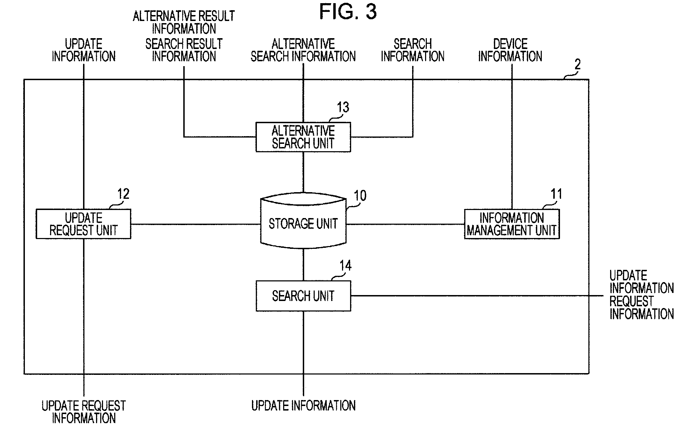

Next, description will be given of the global device management apparatus 2 according to the first embodiment. FIG. 3 illustrates a functional block diagram of the global device management apparatus 2 according to the first embodiment. As illustrated in FIG. 3, the global device management apparatus 2 includes a storage unit 10, an information management unit 11, an update request unit 12, an alternative search unit 13, and a search unit 14.

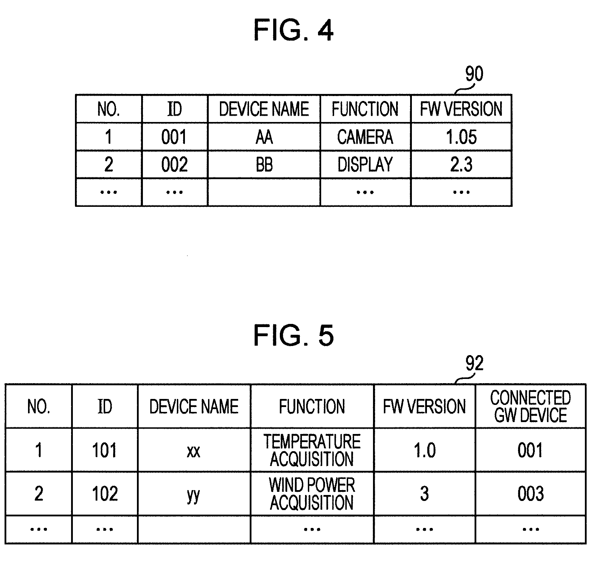

For example, a GW device list 90 illustrated in FIG. 4 is stored in the storage unit 10. An "ID" column of the GW device list illustrated in FIG. 4 represents a device ID of the GW device 4. In addition, in the GW device list, a "device name" column represents a device name of the GW device 4, a "function" column represents a function that is provided by the GW device 4, and a "FW version" column represents an FW version of the GW device 4. Furthermore, information in each row of the GW device list 90 illustrated in FIG. 4 is set as GW device information. In addition, in the first embodiment, the function of the GW device 4 is a device function that is provided to the GW device 4 itself. For example, in a case where the GW device 4 is a camera, the function of the GW device 4 becomes "camera".

In addition, for example, an end device list 92 illustrated in FIG. 5 is stored in the storage unit 10. In the end device list illustrated in FIG. 5, an "ID" column represents a device ID of the end device 6, a "device name" column represents a device name of the end device 6, and a "function" column represents a function that is provided by the end device 6. In addition, in the end device list 92, an "FW version" column represents an FW version of the end device 6, and a "connected GW device" column represents an ID of the GW device 4 to which the end device 6 is connected. Furthermore, in the end device list 92 illustrated in FIG. 5, information in each row is set as end device information. Here, in the first embodiment, the function of the end device 6 is a function of acquiring predetermined information. In addition, a situation, in which the end device 6 and the GW device 4 are connected to each other, represents that the devices exist in a communication available region. In addition, the device ID is set for each device in a unique manner, and it is possible to specify a device by specifying the device ID. In addition, the GW device list 90, and the end device list 92 represent an example of a device information management table a technology that is disclosed.

In addition, update information to be described later is stored in the storage unit 10.

When receiving device information from the GW device 4 through the network 3, the information management unit 11 updates the end device list 92 that is illustrated in FIG. 5 and is stored in the storage unit 10. Here, examples of the device information include information update information, new addition information, and deletion information.

The information update information includes a device ID and an FW version of the end device 6, and a device ID of the GW device 4 to which the end device 6 is connected.

The new addition information includes a device ID, a device name, a function, and a FW version of the end device 6, and a device ID of a connected GW device 4 to which the end device 6 is connected.

The deletion information includes a device ID of the end device 6, and a device ID of the GW device 4 to which the end device 6 is connected.

Specifically, when receiving information update information, the information management unit 11 acquires end device information that matches a device ID that is included in the "ID" column of the end device list 92 and the information update information. In addition, the information management unit 11 updates information of the "FW version" column of the end device information, and the "connected GW device" column based on the FW version that is included in the information update information, and information of a device ID the GW device to which the end device is connected.

In addition, when receiving new addition information, the information management unit 11 adds end device information to the end device list 92 as a new entry. In this case, in the end device list 92, information of a device ID that is included in the new addition information is stored in the "ID" column, information of a device name that is included in the new addition information is stored in the "device name" column, and information of "function" that is included in the new addition information is stored in the "function" column.

In addition, the information management unit 11 stores information of an FW version, which is included in the new addition information, in the "FW version" column, and information of a device ID of the GW device 4, to which the end device included in the new addition information is connected, in the "connected GW device" column.

In addition, when receiving the deletion information, the information management unit 11 acquires end device information that matches a device ID that is included in the "ID" column of the end device list 92 and the deletion information. In addition, in a case where the "connected GW device" column of the end device information that is acquired matches the information of the device ID of the connected GW device which is included in the deletion information, the information management unit 11 deletes an entry corresponding to the end device information from the end device list 92.

For example, when receiving FW update information from an arbitrary site (not illustrated) such as a server, which manages FW update information released by venders of various devices and provides the FW update information, through the network 3, the update request unit 12 stores the FW update information, which is received, in the storage unit 10. Here, the FW update information (hereinafter, simply referred to as "update information") includes a FW version, an FW updating file, a device name, and an update duration. Furthermore, the device name of the end device or the GW device is an example of information that identifies a communication device in the technology that is disclosed.

The update request unit 12 transmits the update request information to the entirety of a plurality of the GW devices 4, which are included in the GW device list 90, through the network 3. Here, the update request information includes a FW version, an update duration, and a device name. Furthermore, the update request information or the update information is an example of an update request in the technology that is disclosed.

When receiving alternative search information from each of the GW devices 4 through the network 3, the alternative search unit 13 transmits search information to each of the GW devices 4 which manage an alternative device candidate 9. Here, the alternative search information includes an absolute position of the GW device 4 that is a transmission source of the alternative search information, a device ID of the GW device 4, and information of a communication available range and a function of the end device 6 that becomes an update object.

Specifically, the alternative search unit 13 specifies a device ID of each of the GW devices 4 which correspond to the GW device information that is included in the GW device list 90. In addition, the alternative search unit 13 specifies end device information that corresponds to the GW device 4 that is included in the end device list 92 for each GW device 4 that corresponds to the device ID that is specified.

In addition, for each of the GW devices 4, the alternative search unit 13 extracts each piece of end device information in which information in the "function" column of the end device information that corresponds to the GW device 4, and a function, which is included in the alternative search information, of the end device 6 that becomes an update object match each other.

Here, it is possible to determine whether or not information is end device information corresponding to the GW device 4 in accordance with whether or not information in the "connected GW device" column of the end device information and a device ID of the GW device 4 match each other.

In addition, the alternative search unit 13 transmits search information, in which the information of the device ID in the "ID" column of corresponding end device information and the alternative search information are combined, to the GW device 4 that is specified. Furthermore, it is assumed that the GW device 4, to which the search information is transmitted from the alternative search unit 13, does not include the GW device 4 that is a transmission source of the alternative search information.

In addition, when receiving search result information from each of the GW devices 4 through the network 3, the alternative search unit 13 transmits alternative result information, which is created based on the search result information, to the GW device 4 that is a transmission source of the alternative search information through the network 3.

Here, in a case where an alternative device is searched under management of the GW device 4 that performs search, the search result information includes information of a device ID of the alternative device. On the other hand, in a case where the alternative device is not searched under management of the GW device 4 that performs search, the search result information includes information indicating that the alternative device is not searched.

In addition, the alternative result information represents information in which respective pieces of search result information are combined, and includes information of a device ID of the alternative device in a case where the alternative device is searched under management of a specific GW device 4. On the other hand, in a case where the alternative device is not searched under management of the entirety of the GW devices 4 which perform search, the alternative result information includes information indicating that the alternative device is not searched.

When receiving update information request information from the GW device 4 as a response of the update request information through the network 3, the search unit 14 acquires update information corresponding to the update information request information from update information that is stored in the storage unit 10. In addition, the search unit 14 transmits the update information, which is acquired, to the GW device 4 through the network 3.

Specifically, the search unit 14 acquires the latest update information corresponding to a device name, which is included in the update information request information that is received, of an update object from the storage unit 10, and transmits the latest update information to the GW device 4 that is a transmission source of the update information request information through the network 3.

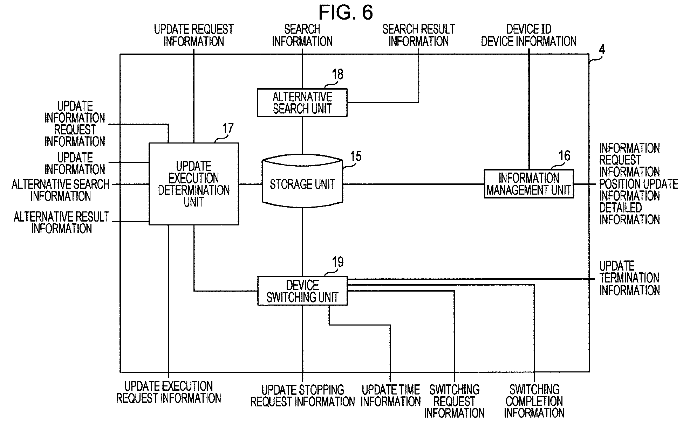

Next, description will be given of the GW device 4 according to the first embodiment. FIG. 6 illustrates a functional block diagram of the GW device 4 according to the first embodiment. As illustrated in FIG. 6, the GW device 4 includes a storage unit 15, an information management unit 16, an update execution determination unit 17, an alternative search unit 18, and a device switching unit 19.

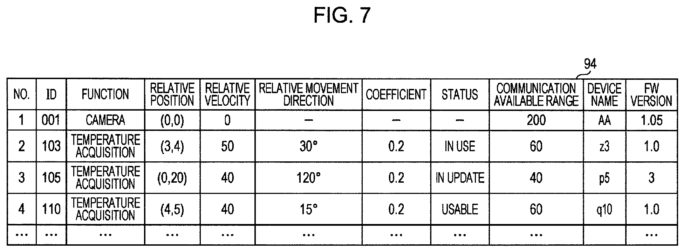

For example, the storage unit 15 stores a management device list 94 illustrated in FIG. 7. Information of the GW device 4 itself, and information of the end device 6 existing in a range, in which communication with the GW device 4 is possible, are stored in the management device list 94. In the management device list 94 illustrated in FIG. 7, it is assumed that device information corresponding to a "No." column of "1" is information of the GW device 4 itself. Furthermore, the management device list 94 is an example of a device information management table of the technology that is disclosed.

Here, in the management device list 94 illustrated in FIG. 7, information in an "ID" column represents a device ID of the GW device 4 or the end device 6 which becomes an object. In addition, information of a "relative position" in the management device list 94 represents a relative position between a position of the GW device 4 itself and a position of the end device 6 that becomes an object. In addition, information in a "relative velocity" column in the management device list 94 represents a relative velocity between the GW device 4 itself and the end device 6 that becomes an object.

In addition, information in a "relative movement direction" column in the management device list 94 represents a movement direction of the end device 6 that becomes an object with respect to a movement direction of the GW device 4 itself. In addition, information in a "coefficient" column in the management device list 94 represents a coefficient that is set in advance to the end device 6 that becomes an object. In addition, information in a "status" column in the management device list 94 represents a status of the end device 6 that becomes an object. In addition, information in a "communication available range" column in the management device list 94 represents a communication available range of the GW device 4 or the end device 6 which becomes an object.

In addition, information in a "device name" column in the management device list 94 represents a device name of the GW device 4 or the end device 6 which becomes an object. In addition, information in an "FW version" column in the management device list 94 represents an FW version of the GW device 4 or the end device 6 which becomes an object.

The information management unit 16 broadcasts a device ID request in the communication available range of the GW device 4 itself through a private network 5 for a predetermined period of time. Furthermore, it is assumed that the device ID request, and a position information request and a detailed information request to be described later are included in the information request information illustrated in FIG. 6.

In addition, when receiving a device ID of the end device through the private network 5, the information management unit 16 determines whether or not end device information corresponding to the device ID exists in the management device list 94. Specifically, in a case where end device information, in which information in the "ID" column which is the end device information included in the management device list 94, and a device ID that is acquired match each other, exists, the information management unit 16 determines that corresponding end device information exists.

Here, in a case of determining that the corresponding end device information exists, the information management unit 16 transmits a position information request to the end device 6, which corresponds to the end device information, through the private network 5.

On the other hand, in a case of determining that the corresponding end device information does not exist, the information management unit 16 transmits a detailed information request to the end device 6, which corresponds to the end device information, through the private network 5.

In addition, when receiving position update information from the end device 6 through the private network 5, the information management unit 16 updates the end device information that is stored in the management device list 94. Furthermore, the position update information is based on a response to the above-described position information request.

Here, the position update information includes a device ID, an FW version, a status, and GPS information of the end device 6 that is a transmission source. Specifically, the information management unit 16 updates end device information, which matches a device ID included in the position update information that is acquired, in the management device list 94. Furthermore, the GPS information is an example of the position information in the technology that is disclosed.

In addition, when receiving detailed information from the end device 6 through the private network 5, the information management unit 16 adds an entry to the management device list 94 as new end device information. Furthermore, the detailed information is based on a response for the above-described detailed information request.

Here, the detailed information includes a device ID, a function, GPS information, a coefficient, a status, a communication available range, a device name, and an FW version of the end device 6 that is a transmission source.

In addition, the information management unit 16 obtains information, which is updated or added end device information, in the "relative position" column, the "relative velocity" column, and the "relative movement direction" column based on GPS information of the GW device 4 itself and the GPS information of the end device 6 which is acquired. Furthermore, the GW device 4 has a GPS function (not illustrated), and can acquire the GPS information of the GW device 4 itself.

Here, as the relative velocity, a moving average is used. Specifically, in a method of calculating the moving average, when a moving average of a relative velocity at time t is set as $v_t$, the moving average is calculated by the following Expression (1).

$$v_t = \alpha \times v_{t-1} + (1 - \alpha) \times v_{current} \quad (0 \le \alpha \le 1)$$

$$\cdots\cdots(1)$$

Here, $\alpha$ is a coefficient that is determined in advance for the corresponding end device 6, and a value of "coefficient" in the end device information, which corresponds to the end device 6, is used as $\alpha$. In addition, $V_{current}$ is a magnitude of a relative velocity vector, which corresponds to the GW device 4, of the end device 6 at time t, and can be obtained from GPS information of each of the GW device 4 and the end device 6.

In addition, the information management unit 16 determines whether or not end device information, which corresponds to a device ID that is not included in device IDs received for a predetermined period of time after broadcasting the device ID request, exists in the management device list 94.

Specifically, in a case where a device ID that is not received for a predetermined period of time exists in the information in the "ID" column of the end device information that is included in the management device list 94, the information management unit 16 determines that end device information to be deleted exists. Furthermore, with regard to the end device information to be deleted, information in the "ID" column is end device information that becomes a device ID that is not received for a predetermined period of time.

In addition, in a case of determining that the end device information to be deleted exists, the information management unit 16 deletes an entry of the end device information, which is included in the management device list 94, to be deleted.

In addition, the information management unit 16 transmits information update information in a case of performing an update of the management device list 94, new addition information in a case of performing new addition, and deletion information in a case of performing deletion of the entry to the global device management apparatus 2 through the network 3. Furthermore, it is assumed that contents of a process performed by the information management unit 16 are included in the information update information, the new addition information, and the deletion information. In addition, the information management unit 16 adds a device ID of the GW device 4 itself to the information update information, the new addition information, and the deletion information, and transmits a plurality of pieces of the information to the global device management apparatus 2 as device information. According to this, in the global device management apparatus 2, it is possible to determine that the information of the end device 6 which is transmitted is information of the end device 6 that is under management of the GW device 4 itself or was under management thereof.

When receiving update request information from the global device management apparatus 2 through the network 3, the update execution determination unit 17 determines whether or not the end device 6 that becomes an update object is under management of the GW device 4 itself. Specifically, the update execution determination unit 17 acquires end device information in which a device name included in the update request information, and information in the "device name" column in the management device list 94 match each other. In a case of acquiring the end device information, the update execution determination unit 17 determines that the end device 6 that becomes an update object is under management of the GW device 4 itself. Furthermore, the update execution determination unit is an example of a determination unit in the technology that is disclosed.

In addition, the update execution determination unit 17 determines whether or not the end device 6 that is an update object is providing a function. Specifically, in a case where information in the "status" column of the end device information corresponding to the end device 6 is "in use", the update execution determination unit 17 determines that the end device 6 is providing a function of acquiring predetermined information.

On the other hand, in a case where the information in the "status" column of the end device information corresponding to the end device 6 is other than "in use", the update execution determination unit 17 determines that the end device 6 is not providing a function.

In addition, in a case where the end device 6 that is an update object is not providing a function, the update execution determination unit 17 determines that the end device 6 can execute an update, and transmits update information request information to the global device management apparatus 2 through the network 3.

Here, it is assumed that a device name of an update object is included in the update information request information. The device name is specified based on end device information of a device that is an update object or GW device information which are included in the management device list 94.

In addition, in a case where the end device 6 that is an update object is providing a function, the update execution determination unit 17 extracts an alternative device candidate 9 that substitutes for the end device 6 that is an update object based on the management device list 94 that is stored in the storage unit 10.

Specifically, the update execution determination unit 17 determines whether or not information in the "function" column of the end device information of the end device 6 that is an update object, and information in the "function" column of the end device information that is included in the management device list 94 match each other. In a case where the two pieces of information in the "function" columns match each other, the update execution determination unit 17 extracts an end device 6 corresponding to the end device information as the alternative device candidate 9.

In addition, in a case where it is difficult to extract the alternative device candidate 9, the update execution determination unit 17 transmits alternative search information to the global device management apparatus 2 through the network 3. Here, the alternative search information includes an absolute position and an device ID of the GW device 4 itself, and information of a function of the end device 6 that is an update object.

In addition, with respect to the alternative device candidate 9 that is extracted, the update execution determination unit 17 determines whether or not the alternative device candidate 9 gets out of a communication available range of the GW device 4 itself during an update of the end device 6 that is an update object based on the update request information that is received, and the management device list 94.

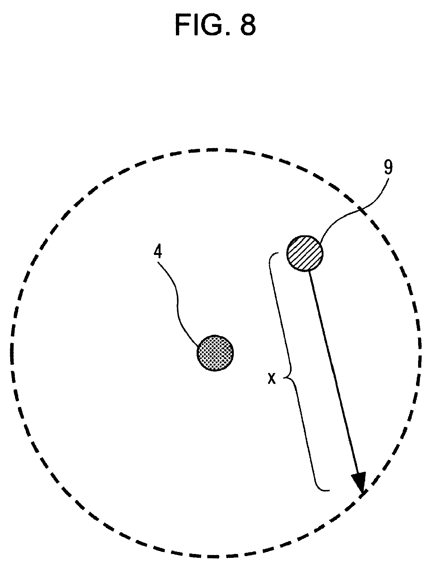

Specifically, the update execution determination unit 17 acquires information in each of the "relative velocity" column, the "relative position" column, the "relative movement direction" column, and the "communication available range" column of the end device information of the alternative device candidate 9. In addition, the update execution determination unit 17 acquires an update duration $T_u$ that is included in the update request information that is received. Furthermore, as illustrated in FIG. 8, in a circle centering around the GW device 4 in which the communication available range that is acquired is set as a radius, the update execution determination unit 17 calculates a distance x by using a relative velocity, a relative position, and a movement direction of the alternative device candidate 9. In addition, in the first embodiment, description is made on the assumption that the communication available range of the end device 6 is narrower than the communication available range of the GW device 4. According to this, in a case where the communication available range of the end device 6 is wider than the communication available range of the GW device 4, the communication available range that is used in the radius becomes the communication available range of the GW device 4.

Here, the distance x is a distance until the alternative device candidate 9 gets out of the communication available range. In addition, the update execution determination unit 17 determines whether or not the following Expression (2) is satisfied based on the update duration $T_u$ that is acquired, the distance x that is acquired, and a relative velocity $v_t$ of the alternative device candidate 9.

$$T_U < x / v_t$$

$$\cdots\cdot(2)$$

In a case where a condition of Expression (2) is satisfied, the update execution determination unit 17 determines that the alternative device candidate 9 does not get out of the communication available range of the GW device 4 itself during an update of the end device 6 that is an update object. On the other hand, in a case where the condition of Expression (2) is not satisfied, the update execution determination unit 17 transmits the alternative search information to the global device management apparatus 2 through the network 3.

In addition, in a case where it is determined that the alternative device candidate 9 does not get out of the communication available range of the GW device 4 itself during an update of the end device 6 that is an update object, the update execution determination unit 17 determines whether or not the alternative device candidate 9 can become an alternative device.

Specifically, in a case where the "status" column of the end device information of the alternative device candidate 9 is not "in update" and is "usable", the update execution determination unit 17 determines the alternative device candidate 9 as an alternative device. In addition, the update execution determination unit 17 determines that the end device 6 can execute an update, and transmits the update information request information to the global device management apparatus 2 through the network 3. Furthermore, the term "usable" is an example of "usable" in the technology that is disclosed.

In addition, in a case where the end device 6 determined as an alternative device exists, the update execution determination unit 17 outputs information of a device ID of the end device 6, which corresponds to the alternative device, to the device switching unit 19. Furthermore, the information of the device ID of the end device 6, which corresponds to the alternative device, can be acquired from the management device list 94.

On the other hand, in a case where the alternative device candidate 9 is not determined as an alternative device, the update execution determination unit 17 transmits the alternative search information to the global device management apparatus 2 through the network 3.

In addition, the update execution determination unit 17 receives alternative result information from the global device management apparatus 2 through the network 3. When the alternative device is determined, the update execution determination unit 17 determines that the end device 6 can execute an update, and transmits the update information request information to the global device management apparatus 2 through the network 3.

In addition, the update execution determination unit 17 outputs the device ID of the end device 6, which is included in the alternative result information and corresponds to the alternative device, to the device switching unit 19. However, in a case where the alternative result information is information indicating that a search result is not obtained, the update execution determination unit 17 assumes that the alternative device is not determined.

In addition, in a case where the alternative device is not determined, the update execution determination unit 17 repeats processes from the process of determining whether or not the end device that becomes an update object is providing a function after passage of a predetermined period of time.

In addition, when receiving update information through the network 3, the update execution determination unit 17 determines whether or not information in the "status" column of the end device information of the end device 6, which becomes an update object, in the management device list 94 is "in use".

Here, in a case where it is determined as "in use", when receiving switching completion information from the device switching unit 19, the update execution determination unit 17 outputs update execution request information, in which the update information acquired through the private network 5 is included, to the end device 6.

On the other hand, in a case where it is determined as "not in use", the update execution determination unit 17 outputs the update information that is acquired to the end device 6 that becomes an update object through the private network 5. Furthermore, the update execution determination unit 17 is an example of a specifying unit and an execution unit in the technology that is disclosed. Furthermore, in a case where it is determined as "not in use" and "not in update", the update execution determination unit 17 may output the update information to the end device 6. Furthermore, a configuration, in which the update execution request information is output and the end device is updated, is an example of update execution in the technology that is disclosed.

The alternative search unit 18 searches an alternative device based on the search information that is received from the global device management apparatus 2 through the network 3. Specifically, the alternative search unit 18 acquires end device information in which information in the "function" column in the management device list 94 matches information, which is included in the search information, of a function of the end device 6 that becomes an update object as end device information of the alternative device candidate 9.

In addition, the alternative search unit 18 determines whether or not the alternative device candidate 9 enters the communication available range of the GW device 4 that becomes an object after t seconds based on the end device information of the alternative device candidate 9 which is acquired, an absolute position of the GW device 4 that becomes an object, and GPS information of the GW device itself. Furthermore, the absolute position of the GW device 4, which becomes an object, is included in the search information. Here, the GW device 4, which becomes an object, represents the GW device 4 that manages the end device 6 that becomes an update object.

Here, the alternative search unit 18 determines whether or not the alternative device candidate 9 enters a range of a circle, which centers around the absolute position of the GW device 4 that becomes an object and in which a communication available range of the alternative device candidate 9 is set as a radius, after t seconds. Furthermore, in a case where the communication available range of the GW device 4 that becomes an object is narrower than the communication available range of the end device 6 of the alternative device candidate 9, the communication available range of the GW device 4, which becomes an object, is set as the radius.

The alternative search unit 18 calculates the absolute position of the alternative device candidate 9 based on information in the "relative position" column of the end device information of the alternative device candidate 9, and an absolute position that is obtained from GPS information of the GW device 4 itself. In addition, an absolute velocity of the alternative device candidate 9 is calculated based on information in the "relative velocity" column of the end device information of the alternative device candidate 9, and an absolute velocity that is obtained from the GPS information of the GW device 4 itself. In addition, an absolute movement direction of the alternative device candidate 9 is calculated based on information in the "relative movement direction" column of the end device information of the alternative device candidate 9, and an absolute movement direction that is obtained from the GPS information of the GW device 4 itself.

In addition, the alternative search unit 18 determines whether or not the alternative device candidate 9 enters a communication available range of the GW device 4 after t seconds based on the absolute position, the absolute velocity, and the absolute movement direction, which are calculated, of the alternative device candidate 9, and the circle centering around the absolute position of the GW device 4 that becomes an object. Furthermore, the circle is a circle which centers around the absolute position of the GW device 4 that becomes an object and in which a radius is set to the communication available range.

In addition, the alternative search unit 18 determines whether or not the alternative device candidate 9, which is determined to enter the communication available range of the GW device 4 after t seconds, gets out of the communication available range of the GW device 4 that becomes an object during an update of the end device 6 that becomes an object.

Specifically, the alternative search unit 18 determines that the alternative device candidate 9 does not get out of the range of the circle for $T_U$ seconds after entering the circle which centers around the GW device 4 that becomes an object and in which the communication available range of the alternative device candidate 9 is set as a radius.

This determination can be made by the alternative search unit 18 by determining whether or not the alternative device candidate 9 gets out of the range of the circle, which centers around the absolute position of the GW device 4 and in which the communication available range is set as a radius, after $t+T_U$ seconds based on the absolute position, the absolute velocity, and the absolute movement direction of the alternative device candidate 9.

Furthermore, in the first embodiment, since description is given of a case where the communication available range of the end device 6 is narrower than the communication available range of the GW device 4, a range in which bidirectional communication between the end device 6 and the GW device 4 is possible is set as the communication available range of the end device 6. According to this, in a case where the communication available range of the GW device 4 is wider than the communication available range of the end device 6, as the above-described radius, the communication available range of the GW device 4 may be used.

In addition, the alternative search unit 18 determines whether or not information in the "status" column of the end device information of the alternative device candidate 9, which does not get out of the communication available range of the GW device 4 that becomes an object during an update of the management device list 94, is not "in update" and is "usable".

In a case where the information in the "status" column of the end device information of the alternative device candidate 9 is not "in update" and is "usable", the alternative search unit 18 sets the alternative device candidate 9 as an alternative device. The alternative search unit 18 transmits search result information, which includes a device ID of the alternative device, to the global device management apparatus 2 through the network 3.

Furthermore, in a case where it is difficult to determine the alternative device, the alternative search unit 18 transmits search result information, which indicates that the alternative device is not searched, to the global device management apparatus 2 through the network 3.

The device switching unit 19 outputs, based on the device ID, which is input from the update execution determination unit 17, of the alternative device, switching request information to the end device 6 that is an alternative device through the private network 5. Specifically, the device switching unit 19 specifies an alternative device based on the input device ID of the alternative device and the management device list 94, and transmits the switching request information to the specified end device 6 through the private network 5. Furthermore, a configuration, in which the switching request information is transmitted and a function is provided from the end device, is an example of setting for acquiring predetermined information of a communication device that executes an update in accordance with update request from a communication device that becomes an alternative of the technology that is disclosed.

In addition, the device switching unit 19 determines whether or not the alternative device gets out of the communication available range of the GW device 4 itself for a remaining update duration $T_{UR}$ based on update time information that is received through the private network 5, and the management device list 94.

Specifically, the device switching unit 19 determines whether or not a condition of the following Expression (3) is satisfied based on end device information that matches a device ID that is included in the update time information in the management device list 94. Furthermore, a distance $x_R$ is a distance until the alternative device gets out of the communication available range. In addition, the remaining update time $T_{UR}$ is included in the update time information.

$$T_{UR} < x_R / v_t$$

$$\cdots\cdots(3)$$

Here, in a case where it is determined by the device switching unit 19 that the alternative device gets out of the communication available range of the GW device 4 itself for the remaining update time, the device switching unit 19 outputs update stopping request information to the end device 6 that is an update object through the private network 5.

In addition, when receiving switching completion information through the private network 5, the device switching unit 19 outputs switching completion information to the update execution determination unit 17. Furthermore, the device switching unit 19 is an example of a setting unit in the technology that is disclosed.

In addition, when receiving the update termination information through the private network 5, the device switching unit 19 determines that an update of the end device 6 that is an update object is terminated.

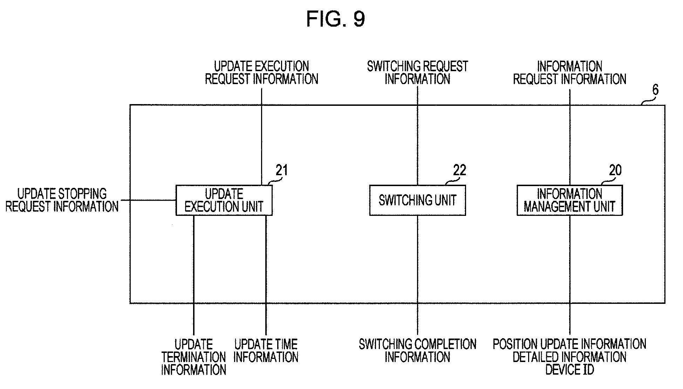

Next, description will be given of the end device 6 according to the first embodiment. FIG. 9 illustrates a functional block diagram of the end device 6 according to the first embodiment. As illustrated in FIG. 9, the end device 6 includes an information management unit 20, an update execution unit 21, and a switching unit 22.

When receiving a device ID request from the GW device 4 through the private network 5, the information management unit 20 transmits the device ID of the end device 6 to the GW device 4 through the private network 5.

In addition, when receiving a position information request from the GW device 4 through the private network 5, the information management unit 20 transmits the position update information of the end device 6 to the GW device 4 through the private network 5.

Furthermore, the information management unit 20 assumes that information contained in the position update information is stored in a memory (not illustrated), and GPS information of the end device 6 is acquired from a GPS (not illustrated) of the end device 6.

In addition, when receiving detailed information request from the GW device 4 through the private network 5, the information management unit 20 transmits detailed information of the end device 6 to the GW device 4 through the private network 5.

In a case where of receiving update execution request information from the GW device 4 through the private network 5, the update execution unit 21 stops a function of the end device 6 itself, and executes an update based on the update information that is included in the update execution request information. Furthermore, after update termination, the update execution unit 21 transmits update termination information to the GW device 4, which is a transmission source of the update execution request information, through the private network 5.

In addition, in a case where of receiving update stopping request information from the GW device 4 through the private network 5, the update execution unit 21 stops update, and starts to provide a function to the GW device 4 that is a transmission source of the update execution request information.

In addition, during an update, the update execution unit 21 transmits update time information, which includes remaining time up to update termination, to the GW device 4 that is a transmission source of the update execution request information through the private network 5 for a predetermined period of time.

When receiving switching request information from the GW device 4 through the private network 5, the switching unit 22 performs setting for providing a function to the GW device 4 that is a transmission source of the switching request information. In addition, the switching unit 22 transmits switching completion information to the GW device 4 that is a transmission source of the switching request information through the private network 5.

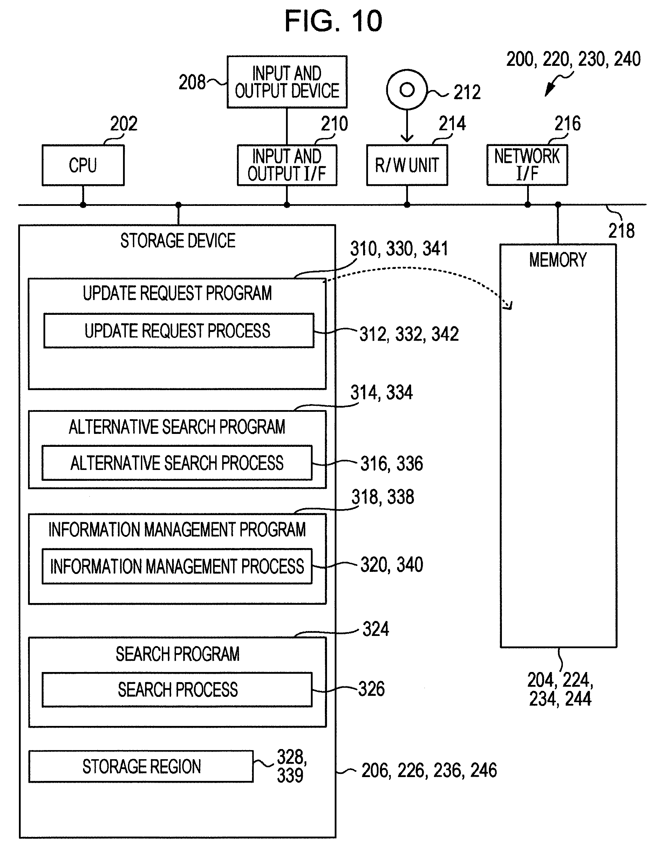

For example, the global device management apparatus 2 can be realized by a computer 200 illustrated in FIG. 10. The computer 200 includes a CPU 202, a memory 204 as a temporary storage region, and a non-volatile storage device 206. In addition, the computer 200 includes an input and output interface (I/F) 210 to which an input and output device 208 is connected. In addition, the computer 200 includes a read/write (R/W) unit 214 that controls reading and writing of data with respect to a recording medium 212, and a network I/F 216 that is connected to the network 3 such as the Internet. The CPU 202, the memory 204, the storage device 206, the input and output I/F 210, the R/W unit 214, and the network I/F 216 are connected to each other through a bus 218. The CPU 202 may be a microprocessor or any other kind of processor.

The storage device 206 can be realized by a hard disk drive (HDD), a solid state drive (SSD), a flash memory, and the like. An update request program 310, an alternative search program 314, an information management program 318, and a search program 324, which allow the computer 200 to function as the global device management apparatus 2, are stored in the storage device 206 as a storage medium. In addition, the storage device 206 includes a storage region 328 in which the GW device information, the end device information, and the update information are stored.

The CPU 202 reads out the update request program 310, the alternative search program 314, the information management program 318, and the search program 324 from the storage device 206, and develops the programs in the memory 204. In addition, the CPU 202 sequentially executes processes of the update request program 310, the alternative search program 314, the information management program 318, and the search program 324.

In addition, the CPU 202 reads out each piece of GW device information that is stored in the storage region 328, and develops the GW device information in the memory 204 as the GW device list 90. In addition, the CPU 202 reads out each piece of end device information that is stored in the storage region 328, and develops the end device information in the memory 204 as the end device list 92.

The update request program 310 includes an update request process 312.

The CPU 202 operates as the update request unit 12 illustrated in FIG. 3 by executing the update request process 312.

The alternative search program 314 includes an alternative search process 316.

The CPU 202 operates as the alternative search unit 13 illustrated in FIG. 3 by executing the alternative search program 314.

The information management program 318 includes an information management process 320.

The CPU 202 operates the information management unit 11 illustrated in FIG. 3 by executing the information management process 320.

The search program 324 includes a search process 326.

The CPU 202 operates as the search unit 14 illustrated in FIG. 3 by executing the search process 326.

According to this, the computer 200, which executes the update request program 310, the alternative search program 314, the information management program 318, and the search program 324, functions as the global device management apparatus 2.

Furthermore, for example, the global device management apparatus 2 can be realized by a semiconductor integrated circuit, and more specifically, an application specific integrated circuit (ASIC) and the like.

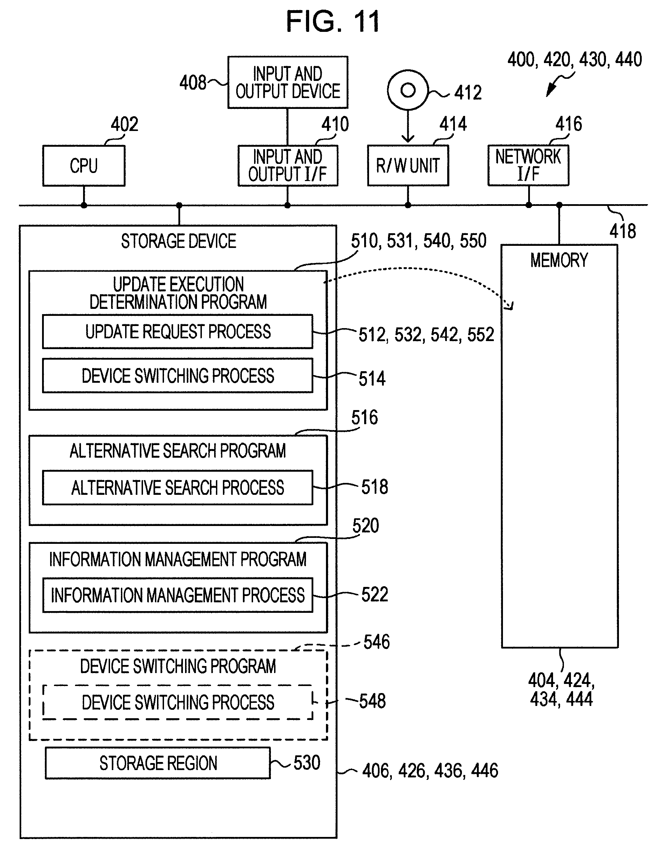

In addition, for example, the GW device 4 can be realized by a computer 400 illustrated in FIG. 11. As is the case with the computer 200, the computer 400 includes a CPU 402, a memory 404, a storage device 406, an input and output I/F 410, an R/W unit 414, and a network I/F 416 which are connected to each other through a bus 418.

The storage device 406 can be realized by an HDD, an SSD, a flash memory, and the like. An update execution determination program 510, an alternative search program 516, and information management program 520, which allow the computer 400 to function as the GW device 4, are stored in the storage device 406 as a storage medium. In addition, the storage device 406 includes a storage region 530 in which the GW device information and the end device information are stored.

The CPU 402 reads out the update execution determination program 510 from the storage device 406, and develops the update execution determination program 510 in the memory 404. In addition, the CPU 402 sequentially executes processes of the update execution determination program 510.

In addition, the CPU 402 reads out the GW device information and the end device information which are stored in the storage region 530, and develops the GW device information and the end device information in the memory 404 as the management device list 94.

The update execution determination program 510 includes an update request process 512 and a device switching process 514.

The CPU 402 operates as the update execution determination unit 17 as illustrated in FIG. 6 by executing the update request process 512. In addition, the CPU 402 operates as the device switching unit 19 illustrated in FIG. 6 by executing the device switching process 514.

The alternative search program 516 includes an alternative search process 518.

The CPU 402 operates as the alternative search unit 18 illustrated in FIG. 6 by executing the alternative search process 518.

The information management program 520 includes an information management process 522.

The CPU 402 operates as the information management unit 16 illustrated in FIG. 6 by executing the information management process 522.

According to this, the computer 400, which executes the update execution determination program 510, the alternative search program 516, and the information management program 520, functions as the GW device 4.

Furthermore, for example, the GW device 4 can be realized by a semiconductor integrated circuit, and more particularly, an ASIC and the like.

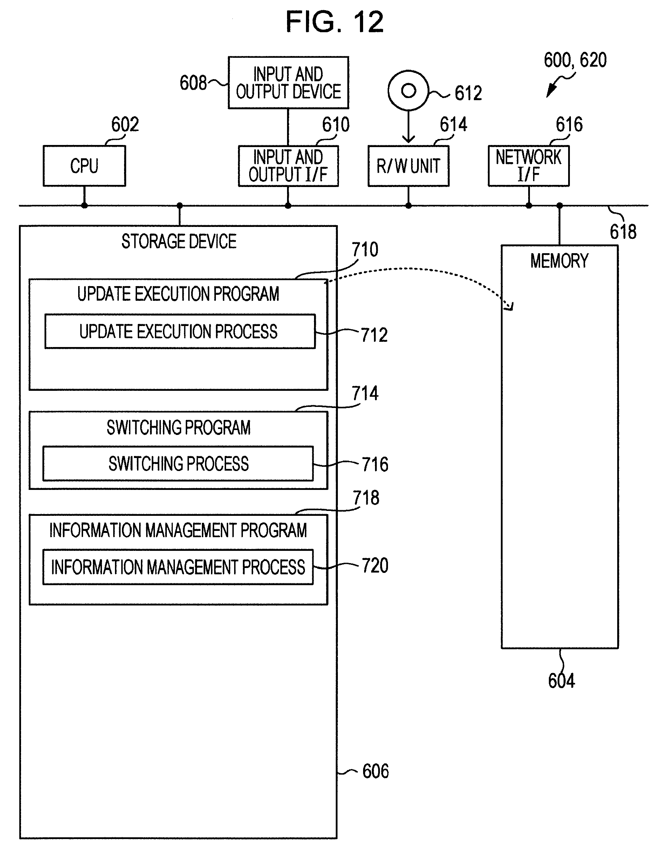

In addition, for example, the end device 6 can be realized by the computer 600 illustrated in FIG. 12. As is the case with the computer 200, the computer 600 includes a CPU 602, a memory 604, a storage device 606, an input and output I/F 610, an R/W unit 614, and a network I/F 616 which are connected to each other through a bus 618. The CPU 602 may be a microprocessor or any other kind of processor.

The storage device 606 can be realized by an HDD, an SSD, a flash memory, and the like. An update execution program 710, a switching program 714, and an information management program 718, which allow the computer 600 to function as the end device 6, are stored in the storage device 606 as a storage medium.

The CPU 602 reads out the update execution program 710 from the storage device 606, and develops the update execution program 710 in the memory 604. In addition, the CPU 602 sequentially executes processes of the update execution program 710.

The update execution program 710 includes an update execution process 712.

The CPU 602 operates as the update execution unit 21 illustrated in FIG. 9 by executing the update execution process 712.

The switching program 714 includes a switching process 716.

The CPU 602 operates as the switching unit 22 illustrated in FIG. 9 by executing the switching process 716.

The information management program 718 includes an information management process 720.

The CPU 602 operates as the information management unit 20 illustrated in FIG. 9 by executing the information management process 720.

According to this, the computer 600, which executes the update execution program 710, the switching program 714, and the information management program 718, functions as the end device 6.

Furthermore, for example, the end device 6 can be realized by a semiconductor integrated circuit, and more particularly, an ASIC and the like.

Next, description will be given of each process in each of the global device management apparatus 2, the GW device 4, and the end device 6.

First, description will be given of an operation of the global device management apparatus 2 according to the first embodiment. When the global device management apparatus 2 receives the update information from an arbitrary site through the network 3, the update request unit 12 transmits the update request information to the entirety of a plurality of the GW devices 4 through the network 3 based on the GW device list 90.

Next, when receiving the update information request information that is transmitted from each of the GW devices 4, the global device management apparatus 2 acquires the update information corresponding to the update information request information from the update information that is stored in the storage unit 10, and transmits the update information to the GW device 4 through the network 3.

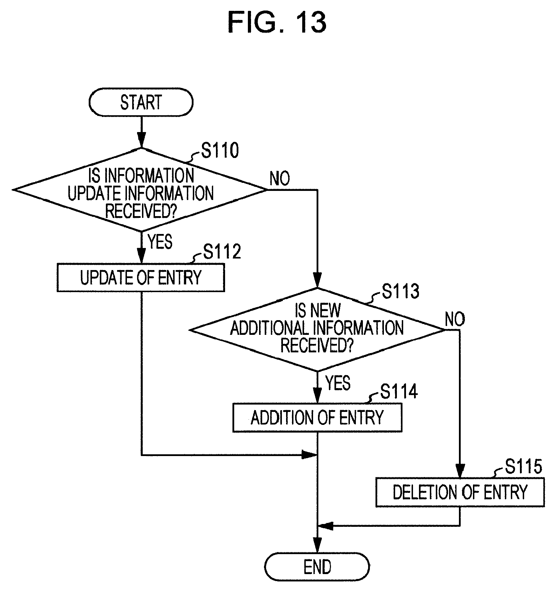

In addition, when the global device management apparatus 2 receives the device information that is transmitted from the GW device 4, an information management process illustrated in FIG. 13 is executed in the global device management apparatus 2. Hereinafter, the information management process will be described in detail.

FIG. 13 is a flowchart illustrating an example of the information management process. In the flowchart of the information management process illustrated in FIG. 13, first, in step S110, the information management unit 11 determines whether or not the device information that is received is the information update information. In a case where the information management unit 11 determines that the device information that is received is the information update information, the information management process proceeds to step S112. On the other hand, in a case where the information management unit 11 determines that the device information that is received is not the information update information, the information management process proceeds to step S113.

Next, in step S112, the information management unit 11 updates end device information of an entry which is included in the end device list 92 that becomes an object based on the information update information that is received.

Next, in step S113, the information management unit 11 determines whether or not the device information that is received is new addition information. In a case where the information management unit 11 determines that the device information that is received is the new addition information, the information management process proceeds to step S114. On the other hand, in a case where the information management unit 11 determines that the device information that is received is not the new addition information, the information management process proceeds to step S115.

Next, in step S114, the information management unit 11 newly adds an entry of end device information to the end device list 92 based on the new addition information that is received.

Next, in step S115, the information management unit 11 deletes an entry of end device information that is included in the end device list 92 and becomes an object based on deletion information that is received, and terminates the information management process.

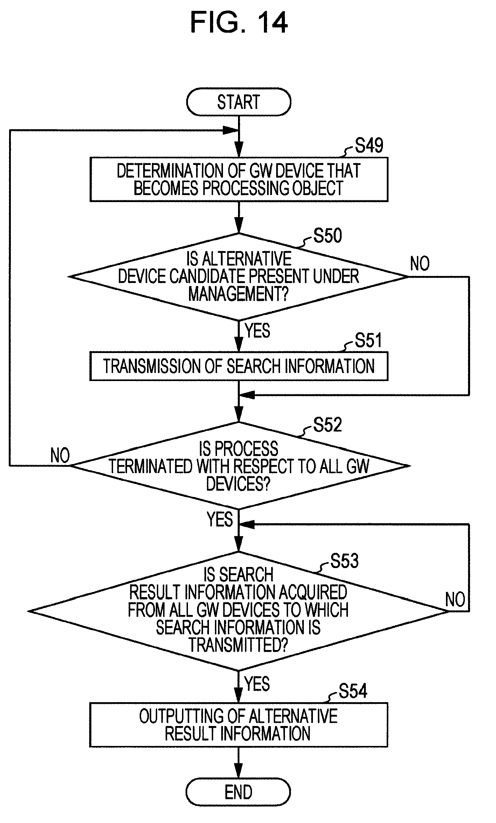

In addition, when the global device management apparatus 2 receives the alternative search information that is transmitted from the GW device 4, the alternative search process illustrated in FIG. 14 is executed in the global device management apparatus 2. Hereinafter, the alternative search process will be described in detail.

FIG. 14 is a flowchart illustrating an example of the alternative search process. In the flowchart of the alternative search process illustrated in FIG. 14, first, in step S49, the alternative search unit 13 determines the GW device 4, which becomes a processing object, from the GW devices 4 which are included in the GW device list 90.

Next, in step S50, the alternative search unit 13 determines whether or not the alternative device candidate 9 exists under management of the GW device 4 that becomes a processing object based on the alternative search information that is acquired, and the end device list 92. In a case where the alternative search unit 13 determines that the alternative device candidate 9 exists, the alternative search process proceeds to step S51. On the other hand, in a case where the alternative search unit 13 determines that the alternative device candidate 9 does not exist, the alternative search process proceeds to step S52.

Next, in step S51, the alternative search unit 13 transmits the search information to the GW device 4 that becomes a processing object.

Next, in step S52, the alternative search unit 13 determines whether or not the processes from step S49 to step S50 or step S51 is terminated with respect to the GW devices 4 corresponding to the entirety of GW device IDs which are included in the GW device list 90. In a case where the alternative search unit 13 determines that the processes from step S49 to step S50 or step S51 are terminated with respect to the entirety of GW devices 4, the alternative search process proceeds to step S53. On the other hand, in a case where the alternative search unit 13 determines that the processes from step S49 to step S50 or step S51 are not terminated with respect to the entirety of GW devices 4, the alternative search process proceeds to step S49. In addition, the alternative search unit 13 changes the GW device 4 that becomes a processing object, and repeats the processes from step S50 to step S52.

Next, in step S53, the alternative search unit 13 determines that the search result information is received from the entirety of GW devices 4 which transmits the search information in step S51. In a case where the alternative search unit 13 determines that the search result information is not received from the entirety of GW devices 4, the alternative search process repeats step S53. On the other hand, in a case where the alternative search unit 13 determines that the search result information is received from the entirety of GW devices 4, the alternative search process proceeds to step S54.

Next, in step S54, the alternative search unit 13 transmits the alternative result information, which is created based on each of a plurality of pieces of search result information which are acquired in step S53, to the GW device 4 that is a transmission source of the alternative search information through the network 3, and the alternative search process is terminated.

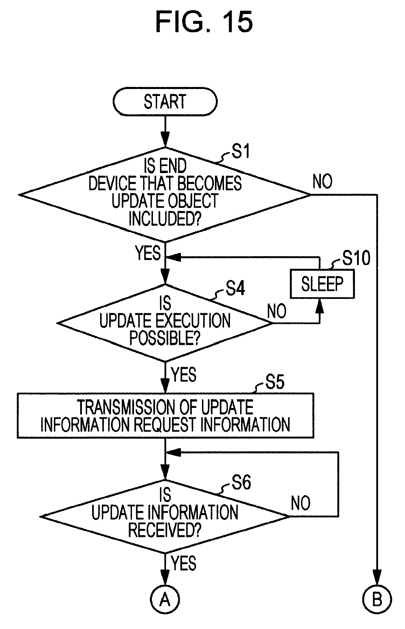

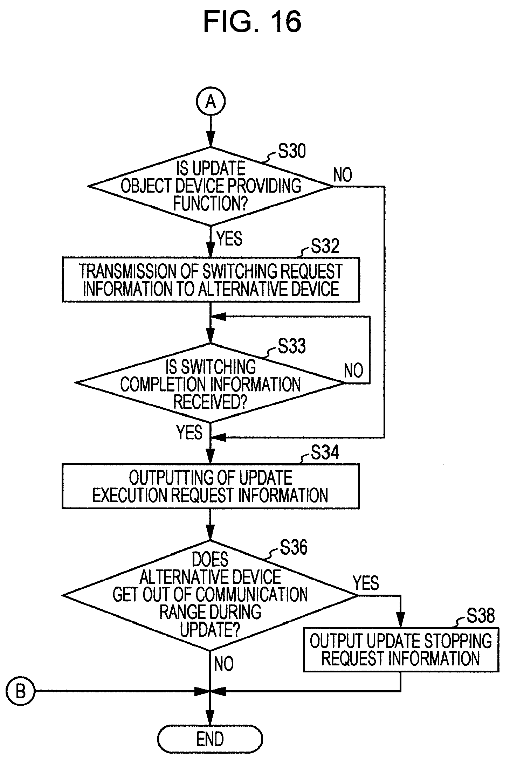

Next, description will be given of an operation of the GW device 4 according to the first embodiment. When the GW device 4 receives the update request information from the global device management apparatus 2 through the network 3, an update determination process illustrated in FIGs. 15 and 16 is executed in the GW device 4. Furthermore, the update determination process that is executed by the GW device 4 is an example of an update control method in the technology that is disclosed. Hereinafter, the update determination process will be described in detail.

FIGs. 15 and 16 are flowcharts illustrating an example of the update determination process. In a flowchart of the update determination process illustrated in FIG. 15, first, in step S1, the update execution determination unit 17 determines whether or not the end device 6, which becomes an update object under management of the GW device 4 itself, exists based on the update request information that is received, and the management device list 94. In a case where the update execution determination unit 17 determines that the end device 6 that becomes an update object exists, the update determination process proceeds to step S4. On the other hand, in a case where the update execution determination unit 17 determines that the end device 6 that becomes an update object does not exist, the update determination process is terminated.

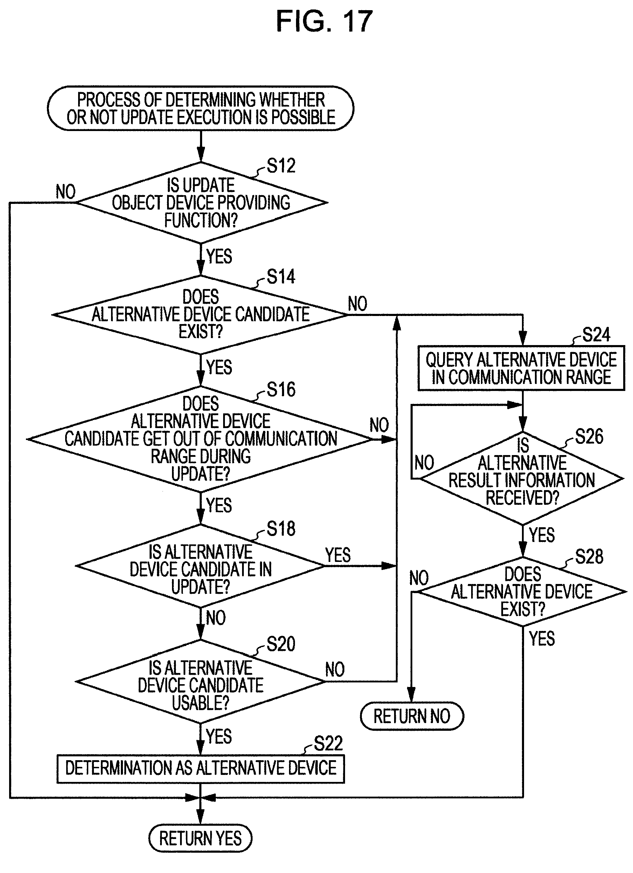

Next, in step S4, the update execution determination unit 17 determines whether or not an update can be executed with respect to the end device 6 that is an update object acquired in step S1. In a case where the update execution determination unit 17 determines that an update can be executed with respect to the end device 6 that is an acquired update object, the update determination process proceeds to step S5. On the other hand, in a case where the update execution determination unit 17 determines that an update is difficult with respect to the end device 6 that is an acquired update object, the update determination process proceeds to step S10. Furthermore, step S4 will be described below in detail with reference to FIG. 17.

In step S12 of a process of determining whether or not update execution is possible in FIG. 17, the update execution determination unit 17 determines whether or not a status of the end device 6 that is an update object acquired in step S1 is in use (is providing a function) based on the management device list 94. In a case where the update execution determination unit 17 determines as "in use", the process of determining whether or not update execution is possible proceeds to step S14. On the other hand, in a case where the update execution determination unit 17 determines as "not in use", the process of determining whether or not update execution is possible is terminated by returning "Yes".

Next, in step S14, the update execution determination unit 17 determines whether or not the alternative device candidate 9, which is an end device having a function corresponding to the function of the end device 6 that is an update object acquired in step S1, exists based on the management device list 94. In a case where the update execution determination unit 17 determines that the alternative device candidate 9 exists, the process of determining whether or not update execution is possible proceeds to step S16. On the other hand, in a case where the update execution determination unit 17 determines that the alternative device candidate 9 does not exist, the process of determining whether or not update execution is possible proceeds to step S24.

Next, in step S16, the update execution determination unit 17 determines that the alternative device candidate 9 gets out of the communication available range of the GW device 4 itself during an update of the end device that is an update object based on the alternative device candidate 9 and the management device list 94. In a case where the update execution determination unit 17 determines that the alternative device candidate 9 gets out of the communication available range, the process of determining whether or not update execution is possible proceeds to step S24. On the other hand, in a case where the update execution determination unit 17 determines that the alternative device candidate 9 does not get out of the communication available range, the process of determining whether or not update execution is possible proceeds to step S18. Furthermore, as the alternative device candidate 9, the alternative device candidate 9 that is acquired in step S14 is set.

Next, in step S18, the update execution determination unit 17 determines whether or not the status of the alternative device candidate 9 is in update based on the alternative device candidate 9 that is acquired in step S14, and the management device list 94. In a case where the update execution determination unit 17 determines that the status of the alternative device candidate 9 is in update, the process of determining whether or not update execution is possible proceeds to step S24. On the other hand, in a case where the update execution determination unit 17 determines that the status of the alternative device candidate 9 is other than the state in update, the process of determining whether or not update execution is possible proceeds to step S20.

Next, in step S20, the update execution determination unit 17 determines whether or not the status of the alternative device candidate 9 is usable based on the alternative device candidate 9 that is acquired in step S14, and the management device list 94. In a case where the update execution determination unit 17 determines that the status of the alternative device candidate 9 is usable, the process of determining whether or not update execution is possible proceeds to step S22. On the other hand, in a case where the update execution determination unit 17 determines that the status of the alternative device candidate 9 is other than the usable state, the process of determining whether or not update execution is possible proceeds to step S24.

Next, in step S22, the update execution determination unit 17 determines the alternative device candidate 9, which is acquired in step S14, as an alternative device, and terminates the process of determining whether or not update execution is possible by returning "Yes".

In step S24, the update execution determination unit 17 transmits the alternative search information to the global device management apparatus 2 through the network 3.

Next, in step S26, the update execution determination unit 17 determines whether or not the alternative result information is received from the global device management apparatus 2. In a case where the update execution determination unit 17 determines that the alternative result information is received from the global device management apparatus 2, the process of determining whether or not update execution is possible proceeds to step S28. On the other hand, in a case where the update execution determination unit 17 determines that the alternative result information is not received from the global device management apparatus 2, the process of determining whether or not update execution is possible repeats step S26.

Next, in step S28, the update execution determination unit 17 determines whether or not information of the alternative device is included in the alternative result information acquired in step S26. In a case where the update execution determination unit 17 determines that the information of the alternative device is not included in the alternative result information, terminates the process of determining whether or not update execution is possible by returning "No". On the other hand, in a case where the update execution determination unit 17 determines that the information of the alternative device is included in the alternative result information, the alternative device corresponding to the information of the alternative devices is determined as an alternative device, returns "Yes", and terminates the process of determining whether or not update execution is possible. Furthermore, in a case where a plurality of pieces of information of the alternative device are included in the alternative result information, the update execution determination unit 17 may determine an alternative device corresponding to information of the alternative device which is randomly selected as an alternative device.

Next, in step S5 in the update determination process in FIG. 15, the update execution determination unit 17 transmits the update information request information, which corresponds to a device that is an update object, to the global device management apparatus 2 through the network 3.

Next, in step S6, the update execution determination unit 17 determines whether or not the update information is received from the global device management apparatus 2 through the network 3. In a case where the update execution determination unit 17 determines that the update information is received, the update determination process proceeds to step S30 in FIG. 16. On the other hand, in a case where the update execution determination unit 17 determines that the update information is not received, the update determination process repeats step S6.

Next, in step S30 of FIG. 16, the update execution determination unit 17 determines whether or not the status of the end device 6 that is an update object acquired in step S1 is in use based on the management device list 94. In a case where the update execution determination unit 17 determines that the status of the end device that is an update object is in use, the update determination process proceeds to step S32. On the other hand, in a case where the update execution determination unit 17 determines that the status of the end device that is an update object is other than the in-use status, the update execution determination process proceeds to step S34.

Next, in step S32, the device switching unit 19 transmits the switching request information to the alternative device that is specified in step S4 through the private network 5.

Next, in step S33, the device switching unit 19 determines whether or not the switching completion information is received through the private network 5. In a case where the device switching unit 19 determines that the switching completion information is received, the update determination process proceeds to step S34. On the other hand, in a case where the device switching unit 19 determines that the switching completion information is not received, the update determination process repeats the process in step S33.

Next, in step S34, the update execution determination unit 17 transmits the update execution request information, which includes the update information acquired in step S6, to the end device 6 that becomes an update object through the private network 5.

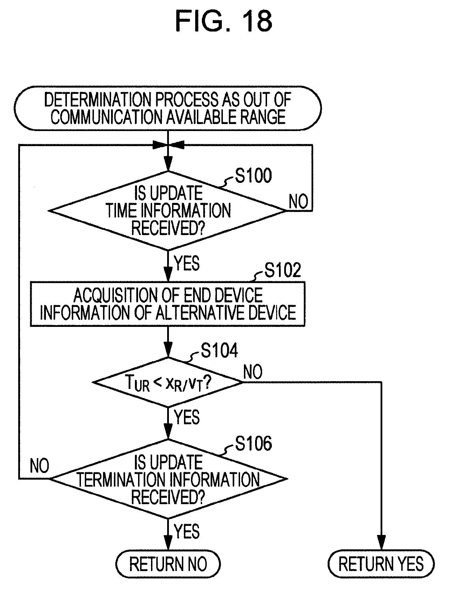

Next, in step S36, the device switching unit 19 determines whether or not the alternative device, which is acquired in step S4, gets out of the communication available range of the GW device 4 itself during an update of the end device 6 that is an update object. In a case where the device switching unit 19 determines that the alternative device gets out of the communication available range, the update determination process proceeds to step S38. On the other hand, in a case where the device switching unit 19 determines that the alternative device does not get out of the communication available range, the update determination process is terminated. Here, with regard to step S36, a determination process as out of communication available range in FIG. 18 will be described in detail.

In step S100 in the determination process as out of communication available range in FIG. 18, the device switching unit 19 determines whether or not the update time information is received from the alternative device through the private network 5. In a case where the device switching unit 19 determines that the update time information is received, the determination process as out of communication available range proceeds to step S102. On the other hand, in a case where the device switching unit 19 determines that the update time information is not received, the determination process as out of communication available range repeats the process in step S100.

Next, in step S102, the device switching unit 19 acquires the end device information of the alternative device from the management device list 94.

Next, in step S104, the device switching unit 19 determines whether or not the condition of Expression (3) is satisfied based on the update time information that is acquired in step S100 and the end device information of the alternative device which is acquired in step S102. In a case where the device switching unit 19 determines that the condition of Expression (3) is satisfied, the determination process as out of communication available range proceeds to step S106. On the other hand, in a case where the device switching unit 19 determines that the condition of Expression (3) is not satisfied, the determination process as out of communication available range is terminated by returning "Yes".

Next, in step S106, the device switching unit 19 determines whether or not the update termination information is received from the end device 6 that is an update object through the private network 5. In a case where the device switching unit 19 determines that the update termination information is received, the determination process as out of communication available range is terminated by returning "No". On the other hand, in a case where the device switching unit 19 does not receives the update termination information, the determination process as out of communication available range proceeds to step S100, and the processes from step S100 are repeated.

In step S38 of the update determination process in FIG. 16, the device switching unit 19 outputs the update stopping request information to the end device 6 that is an update object through the private network 5.

In step S10 in FIG. 15, the update execution determination unit 17 sleeps the update determination process for a predetermined period of time, and the process proceeds to step S4.

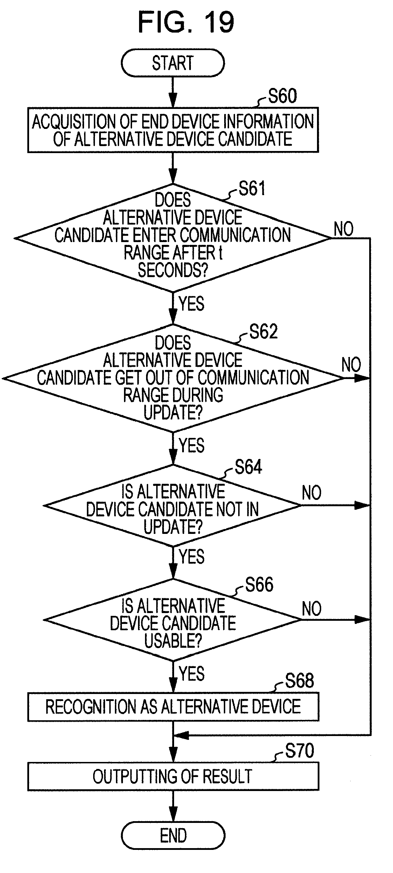

In addition, when the search information transmitted from the global device management apparatus 2 is received, an alternative device search process illustrated in FIG. 19 is executed in the GW device 4. Hereinafter, the alternative device search process will be described in detail.

In the alternative device search process illustrated in FIG. 19, first, in step S60, the alternative search unit 18 acquires end device information of the alternative device candidate 9 based on the search information that is received, and the management device list 94.

Next, in step S61, the alternative search unit 18 determines whether or not the alternative device candidate 9 enters the communication available range of the GW device 4 that becomes an object after t seconds based on the search information that is received, and the end device information that is acquired in step S60. In a case where the alternative search unit 18 determines that the alternative device candidate 9 enters the communication available range, the alternative device search process proceeds to step S62. On the other hand, in a case where the alternative search unit 18 determines that the alternative device candidate 9 does not enter the communication available range, the alternative device search process proceeds to step S70.

Next, in step S62, the alternative search unit 18 determines whether or not the alternative device candidate 9, which is acquired in step S60, gets out of the communication available range of the GW device 4 during an update of the end device 6 that is an update object based on the search information that is received, and the management device list 94. In a case where the alternative search unit 18 determines that the alternative device candidate 9 gets out of the communication available range, the alternative device search process proceeds to step S70. On the other hand, in a case where the alternative search unit 18 determines that the alternative device candidate 9 does not get out of the communication available range, the alternative device search process proceeds to step S64.

Next, in step S64, the alternative search unit 18 determines whether or not the status of the alternative device candidate 9, which is acquired in step S60, is in update based on the management device list 94. In a case where the alternative search unit 18 determines that the status of the alternative device candidate 9 is in update, the alternative device search process proceeds to step S70. On the other hand, in a case where the alternative search unit 18 determines that the status of the alternative device candidate 9 is other than the in-update state, the alternative device search process proceeds to step S66.

Next, in step S66, the alternative search unit 18 determines that the status of the alternative device candidate 9, which is acquired in step S60, is usable based on the management device list 94. In a case where the alternative search unit 18 determines that the status of the alternative device candidate 9 is usable, the process proceeds to step S68. On the other hand, in a case where the alternative search unit 18 determines that the status of the alternative device candidate 9 is other than the usable state, the alternative device search process proceeds to step S70.

Next, in step S68, the alternative search unit 18 determines the alternative device candidate 9 that is acquired in step S60 as an alternative device.

Next, in step S70, in a case where the alternative device is determined in step S68, the search result is transmitted to the global device management apparatus 2. In addition, in a case where the process in step S68 is not executed, search result information, which indicates that the alternative device does not exist, is transmitted to the global device management apparatus 2. In addition, the alternative search unit 18 terminates the alternative device search process.

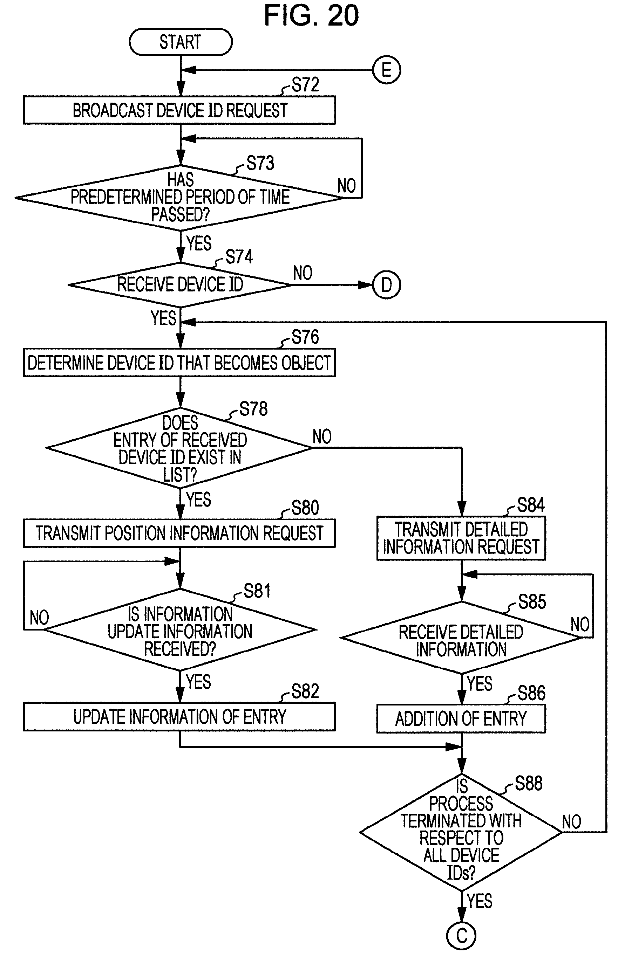

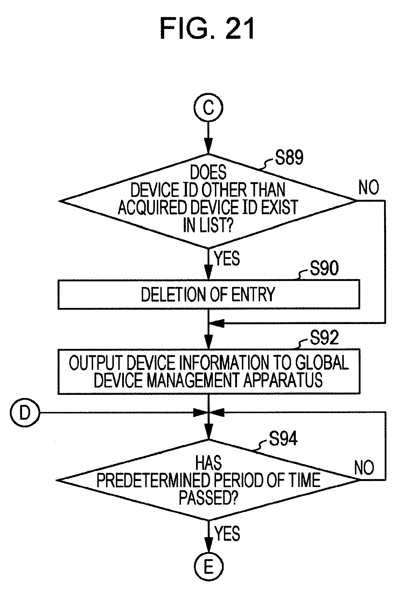

In addition, in the GW device 4, an information management process illustrated in FIGs. 20 and 21 is executed for a predetermined period of time. Hereinafter, the information management process will be described in detail.

In the information management process illustrated in FIG. 20, first, in step S72, the information management unit 16 broadcasts a device ID request to a plurality of end devices 6 in the communication available range of the GW device 4 itself through the private network 5.

Next, in step S73, the information management unit 16 determines whether or not a predetermined period of time has passed. In a case where the information management unit 16 determines that the predetermined period of time has passed, the information management process proceeds to step S74. On the other hand, in a case where the information management unit 16 determines that the predetermined period of time does not have passed, the information management process repeats step S73.

Next, in step S74, the information management unit 16 determines whether or not the device ID is received. In a case where the information management unit 16 determines that the device ID is received, the information management process proceeds to step S76. On the other hand, in a case where the information management unit 16 determines that the device ID is not received, the information management process proceeds to step S94 in FIG. 21.

Next, in step S76, the information management unit 16 determines a device ID, which becomes a processing object, from the device ID that is received in step S74.

Next, in step S78, the information management unit 16 determines whether or not the device ID, which is determined in step S76, exists in entries of the management device list 94. In a case where the information management unit 16 determines that the device ID exists in the entries, the information management process proceeds to step S80. On the other hand, in a case where the information management unit 16 determines that the device ID does not exist in the entries, the information management process proceeds to step S84.

Next, in step S80, the information management unit 16 transmits a position information request to the end device 6 corresponding to the device ID that becomes a processing object through the private network 5.

Next, in step S81, the information management unit 16 determines whether or not the position update information is received from the end device 6. In a case where the information management unit 16 determines that the position update information is received, the information management process proceeds to step S82. On the other hand, in a case where the information management unit 16 determines that the position update information is not received, the information management process repeats step S81.

Next, in step S82, the information management unit 16 updates the management device list 94 based on the position update information that is acquired in step S81, and the GPS information of the GW device 4 itself.

In step S84, the information management unit 16 transmits the detailed information request to the end device 6 corresponding to the device ID that becomes a processing object through the private network 5.

Next, in step S85, the information management unit 16 determines whether or not the detailed information is received from the end device 6. In a case where the information management unit 16 determines that the detailed information is received, the information management process proceeds to step S86. On the other hand, in a case where the information management unit 16 determines that the detailed information is not received, the information management process repeats step S85.

Next, in step S86, the information management unit 16 adds a new entry to the management device list 94 based on the detailed information that is acquired in step S85.

Next, in step S88, with respect to the entirety of device IDs which are acquired in step S74, the information management unit 16 determines whether or not the processes from step S76 to step S82 or step S86 are terminated. In a case where the information management unit 16 determines that the processes are terminated, the information management process proceeds to step S89 in FIG. 21. On the other hand, in a case where the information management unit 16 determines that the processes are not terminated, the information management process proceeds to step S76, and repeats the processes from step S78 to step S88 after changing a device ID that becomes an object.

Next, in step S89 in FIG. 21, the information management unit 16 determines whether or not end device information, which corresponds to a device ID other than the acquired device ID, exists in the management device list 94. Specifically, the information management unit 16 makes a determination based on the device ID that is acquired in step S74, and the management device list 94. In a case where the information management unit 16 determines that the end device information, which corresponds to a device ID other than the acquired device ID, exists, the information management process proceeds to step S90. On the other hand, in a case where the information management unit 16 determines that the end device information, which corresponds to a device ID other than the acquired device ID, does not exist, the information management process proceeds to step S92.

Next, in step S90, the information management unit 16 deletes an entry, which corresponds to the device ID that is acquired in step S89, from the management device list 94.

Next, in step S92, the information management unit 16 transmits, based on the process result, at least one of the information update information, the new addition information, and the deletion information to the global device management apparatus 2 as the device information through the network 3. Furthermore, in a case where the information update information, the new addition information, and the deletion information do not exist, the information management process by the information management unit 16 proceeds to step S94. Furthermore, a process result is a process result in step S82, step S86, and step S90.

Next, in step S94, the information management unit 16 determines whether or not a predetermined period of time has passed. In a case where the information management unit 16 determines that the predetermined period of time has passed, the information management process proceeds to step S72 in FIG. 20. On the other hand, in a case where the information management unit 16 determines that the predetermined period of time does not have passed, the information management process repeats the process in step S94.

Next, description will be given of an operation of the end device 6 according to the first embodiment. When receiving the device ID request from the GW device 4 through the private network 5, the end device 6 transmits a device ID thereof to the GW device 4 that is a request source. In addition, when receiving the position information request from the GW device 4 through the private network 5, the end device 6 transmits the position update information of the end device itself to the GW device 4 that is a request source. In addition, when receiving the detailed information request from the GW device 4 through the private network 5, the end device 6 transmits the detailed information of the end device itself to the GW device 4 that is a request source. In addition, when receiving the switching request information from the GW device 4, the end device 6 itself is set to provide a function to the GW device 4 that is a transmission source of the switching request information, and when the setting is completed, the end device 6 transmits the switching completion information to the GW device that is a transmission source.

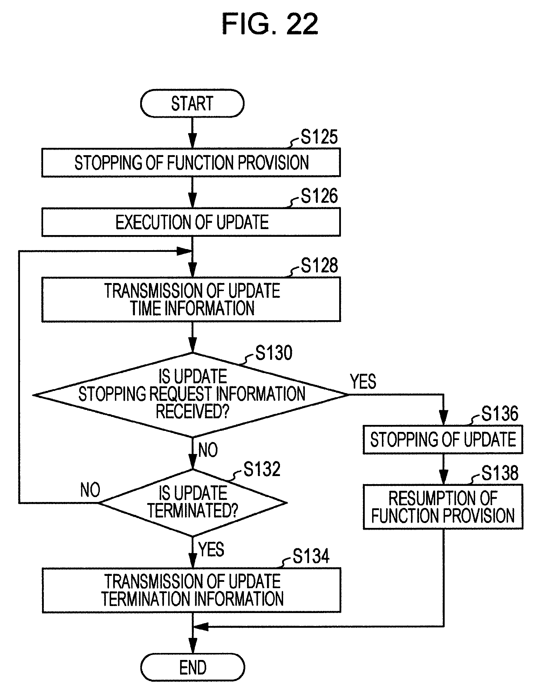

In addition, when the end device 6 receives the update execution request information from the GW device 4 through the private network 5, an update process illustrated in FIG. 22 is executed in the end device 6. Hereinafter, the update process will be described in detail.

FIG. 22 is a flowchart illustrating an example of the update process. In the flowchart of the update process illustrated in FIG. 22, first, in step S125, the update execution unit 21 stops providing of a function to the GW device 4 that manages the end device 6 itself.

Next, in step S126, the update execution unit 21 initiates an update of FW of the end device 6 itself based on the update information included in the update execution request information that is received.

Next, in step S128, the update execution unit 21 acquires update time information from an achievement rate of an update, and time passage, and transmits the update time information to the GW device 4 through the private network 5.

Next, in step S130, the update execution unit 21 determines whether or not the update stopping request information is received from the GW device 4 through the network 3. In a case where the update execution unit 21 determines that the update stopping request information is received, the update process proceeds to step S136. On the other hand, in a case where the update execution unit 21 determines that the update stopping request information is not received, the update process proceeds to step S132.

Next, in step S132, the update execution unit 21 determines whether or not the update is terminated. In a case where the update execution unit 21 determines that the update is terminated, the update process proceeds to step S134. On the other hand, in a case where the update execution unit 21 determines that the update is not terminated, the update process proceeds to step S128, and the processes from step S128 are repeated.

Next, in step S134, the update execution unit 21 transmits the update termination information to the GW device 4 through the private network 5, and the update process is terminated.

In step S136, the update execution unit 21 stops the update process.

In step S138, the update execution unit 21 is set so as to resume the providing of the function of the end device 6 itself to the GW device 4 to which providing of the function is stopped in step S125, and the update process is terminated.

As described above, according to the first embodiment, the function of the end device, which is an update object, is replaced by the end device that does not get out of the communication available range with the GW device during an update of FW and the like of the end device. According to this, even in a case where regular connection properties are not secured similar to a case where the end device that is an update object has movability, a case where providing of a function is stopped during an update, and the like, it is possible to perform an update of the end device without stopping of the providing of a function that is provided to the GW device.

When managing a device which has movability and in which regular connection is not secured, it is preferable to provide detailed information. However, when using the technology according to the first embodiment, even when the detailed information is not managed, providing of a service function may not be stopped in update.

Next, description will be given of a second embodiment. Furthermore, the same reference numerals will be given portions having the same configuration and the same operation as in the first embodiment, and description thereof will not be repeated.

The second embodiment is different from the first embodiment in a configuration in which in a case where update information is received in a global device management apparatus, update request information is transmitted to only a GW device including an end device that is an update object under management.

FIG. 2 is an example of an update system 100 according to the second embodiment. As illustrated in FIG. 2, the update system 100 includes a global device management apparatus 102, a GW device 104, and an end device 6.

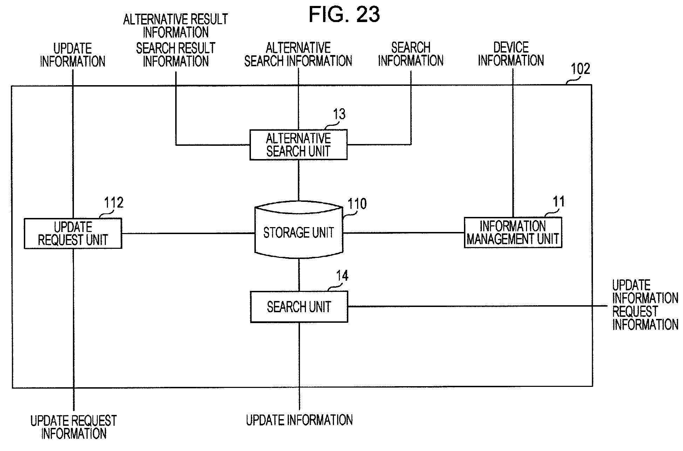

Next, description will be given of the global device management apparatus 102 according to the second embodiment. FIG. 23 illustrates a functional block diagram of the global device management apparatus 102 according to the second embodiment. As illustrated in FIG. 23, the global device management apparatus 102 includes a storage unit 110, an information management unit 11, an update request unit 112, an alternative search unit 13, and a search unit 14.

The GW device list 90, the end device list 92, the update information, and an update object list 96 are stored in the storage unit 110.

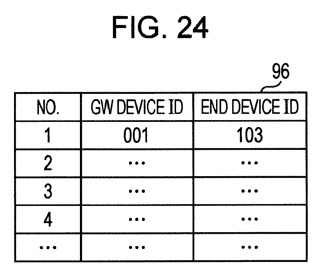

When receiving the update information from an arbitrary site (not illustrated), which provides the update information, through the network 3, for example, the update request unit 112 creates the update object list 96, which includes the GW device 104 in which the end device 6 as an update object exists under management, as illustrated in FIG. 24. In addition, the update request unit 112 stores the update object list 96, which is created, in the storage unit 110.

Specifically, the update request unit 112 acquires each piece of GW device information that is included in the GW device list 90 stored in the storage unit 110. In addition, with respect to each piece of GW device information that is acquired, the update request unit 112 acquires end device information in which information in the "ID" column of the GW device information, and information in the "connected GW device" column of the end device information included in the end device list 92 match each other. In addition, the update request unit 112 acquires each piece of end device information, in which information in the "device name" column of the end device information that is acquired, and a device name that is included in the acquired update information match each other, as end device information of an update object.

In addition, with respect to each piece of the end device information of the update object that is acquired, the update request unit 112 stores the information in the "connected GW device" column of the end device information of the update object in a "GW device ID" column of the update object list 96. In addition, the update request unit 112 stores information in the "ID" column of the end device information of the update object in an "end device ID" column of the update object list 96 in correlation with the information in the "GW device ID" column.

In addition, the update request unit 112 transmits the update request information to each of a plurality of the GW devices 104, which manages the end device 6 that becomes an update object, based on the update object list 96 that is stored in the storage unit 110. Specifically, the update request unit 112 transmits the update request information, which includes information of the "end device ID" corresponding to the "GW device ID", to each of the GW devices 104 which respectively correspond to a plurality of pieces of information in the "GW device ID" column in the update object list 96.

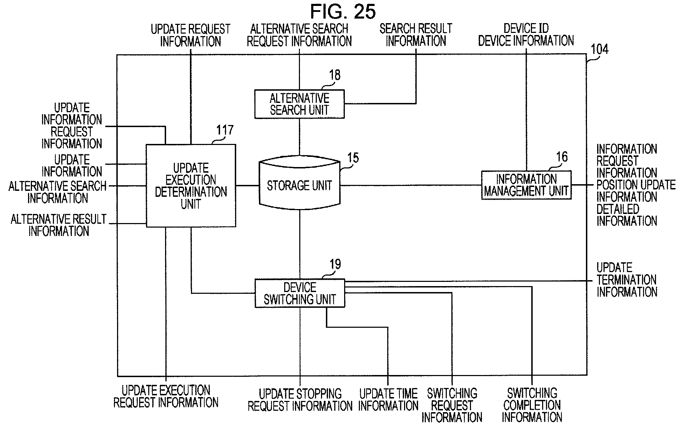

Next, description will be given of the GW device 104 according to the second embodiment. FIG. 25 illustrates a functional block diagram of the GW device 104 according to the second embodiment. As illustrated in FIG. 25, the GW device 104 includes a storage unit 15, an information management unit 16, an update execution determination unit 117, an alternative search unit 18, and a device switching unit 19.

When receiving the update request information from the global device management apparatus 102 through the network 3, the update execution determination unit 117 specifies the end device 6 that becomes an update object based on the update request information and the management device list 94 that is stored in the storage unit 15.

Specifically, the update execution determination unit 117 specifies the end device 6 corresponding to end device information, in which the information in the "ID" column in the management device list 94 match the end device ID that is included in the update request information, as an end device that becomes an update object. Furthermore, other processes by the update execution determination unit 117 are the same as those by the update execution determination unit 17 according to the first embodiment, and thus description thereof will not be repeated.

For example, the global device management apparatus 102 can be realized by a computer 220 illustrated in FIG. 10. The computer 220 includes a CPU 202, a memory 224 as a temporary storage region, and a non-volatile storage device 226. In addition, the computer 200 includes an input and output interface (I/F) 210 to which an input and output device 208 is connected. In addition, the computer 220 includes a read/write (R/W) unit 214 that controls reading and writing of data with respect to a recording medium 212, and a network I/F 216 that is connected to the network 3 such as the Internet. The CPU 202, the memory 224, the storage device 226, the input and output I/F 210, the R/W unit 214, and the network I/F 216 are connected to each other through the bus 218.

The storage device 226 can be realized by a hard disk drive (HDD), a solid state drive (SSD), a flash memory, and the like. An update request program 330, an alternative search program 314, an information management program 318, and a search program 324, which allow the computer 200 to function as the global device management apparatus 102, are stored in the storage device 206 as a storage medium. In addition, the storage device 226 includes a storage region 339 in which the GW device information, the end device information, the update information, and the update object information are stored.

The CPU 202 reads out the update request program 330, the alternative search program 314, the information management program 318, and the search program 324 from the storage device 226, and develops the programs in the memory 224.

In addition, the CPU 202 reads out each piece of GW device information that is stored in the storage region 339, and develops the GW device information in the memory 224 as the GW device list 90. In addition, the CPU 202 reads out each piece of end device information that is stored in the storage region 339, and develops the end device information in the memory 224 as the end device list 92. In addition, the CPU 202 reads out each piece of update object information that is stored in the storage region 339, and develops the update object information in the memory 224 as the update object list 96.

The update request program 330 includes an update request process 332.

The CPU 202 operates as the update request unit 112 illustrated in FIG. 23 by executing the update request process 332. The other programs are the same as in the first embodiment, and thus description thereof will not be repeated.

According to this, the computer 220, which executes the update request program 330, the alternative search program 314, the information management program 318, and the search program 324, functions as the global device management apparatus 102.

Furthermore, for example, the global device management apparatus 102 can be realized by a semiconductor integrated circuit, and more specifically, an application specific integrated circuit (ASIC) and the like.

In addition, for example, the GW device 104 can be realized by a computer 420 that is illustrated in FIG. 11. As is the case with the computer 220, the computer 420 includes a CPU 402, a memory 424, a storage device 426, an input and output I/F 410, an R/W unit 414, and a network I/F 416 which are connected to each other through a bus 418.

The storage device 426 can be realized by a hard disk drive (HDD), a solid state drive (SSD), a flash memory, and the like. An update execution determination program 531, an alternative search program 516, and information management program 520, which allow the computer 420 to function as the GW device 104, are stored in the storage device 426 as a storage medium. In addition, the storage device 426 includes a storage region 530 in which the GW device information and the end device information are stored.

The CPU 402 reads out the update execution determination program 531 from the storage device 426, and develops the update execution determination program 531 in the memory 424. In addition, the CPU 402 sequentially executes processes of the update execution determination program 510.

In addition, the CPU 402 reads out the GW device information and the end device information which are stored in the storage region 530, and develops the GW device information and the end device information in the memory 424 as the management device list 94.

The update execution determination program 531 includes an update request process 532 and a device switching process 514.

The CPU 402 operates as the update execution determination unit 117 illustrated in FIG. 25 by executing the update request process 532. Furthermore, the other processes and programs are the same as in the first embodiment, and thus description thereof will not be repeated.

According to this, the computer 420, which executes the update execution determination program 531, the alternative search program 516, and the information management program 520, functions as the GW device 104.

Furthermore, for example, the GW device 104 can be realized by a semiconductor integrated circuit, and more particularly, an application specific integrated circuit (ASIC) and the like.

Next, description will be given of each process in the global device management apparatus 102 and the GW device 104.

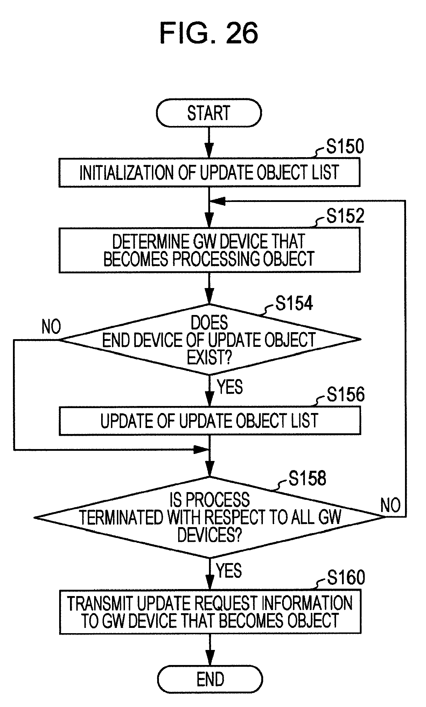

First, description will be given of an operation of the global device management apparatus 102 according to the second embodiment. When the global device management apparatus 102 receives the update information from an arbitrary site through the network 3, an update request process illustrated in FIG. 26 is executed in the global device management apparatus 102. Furthermore, the other processes are the same as in the global device management apparatus 2 according to the first embodiment, and thus description thereof will not be repeated.

FIG. 26 is a flowchart illustrating an example of the update request process. In the flowchart of the update request process illustrated in FIG. 26, first, in step S150, the update request unit 112 initializes the update object list 96 that is stored in the storage unit 110.

Next, in step S152, the update request unit 112 acquires the GW device information, which becomes a processing object, from the GW device information that is included in the GW device list 90 that is stored in the storage unit 110.

Next, in step S154, the update request unit 112 determines whether or not the end device 6, which becomes an update object under management of the GW device 104 that becomes a processing object, exists from the end device list 92 that is stored in the storage unit 110. In a case where the update request unit 112 determines that the end device 6, which becomes an update object, exists, the update request process proceeds to step S156. On the other hand, in a case where the update request unit 112 determines that the end device 6, which becomes an update object, does not exist, the update request process proceeds to step S158. Furthermore, the update request unit 112 acquires end device information of an update object, which corresponds to the end device 6 that becomes an update object, from the storage unit 110.

Next, in step S156, the update request unit 112 updates the update object list 96, which is acquired in step S150 or step S156, based on the end device information of the update object that is acquired in step S154.

Next, in step S158, the update request unit 112 determines whether or not the processes from step S152 to step S154 or step S156 are terminated with respect to the entire pieces of GW device information which are stored in the GW device list 90 that is stored in the storage unit 110. In a case where the update request unit 112 determines that the processes from step S152 to step S154 or step S156 are terminated with respect to the entire pieces of GW device information which are included in the GW device list 90, the update request process proceeds to step S160. On the other hand, in a case where the update request unit 112 determines that the processes from step S152 to step S154 or step S156 are not terminated with respect to the entire pieces of GW device information which are included in the GW device list 90, the update request process proceeds to step S152. In addition, in step S152, the update request unit 112 changes the GW device information that becomes a processing object, and the update request process repeats the processes from step S154 to step S158.

Next, in step S160, the update request unit 112 transmits the update request information with respect to each GW device ID that is included in the "GW device ID" column of the update object information that is included in the update object list 96 stored in the storage unit 110, and the update request process is terminated.

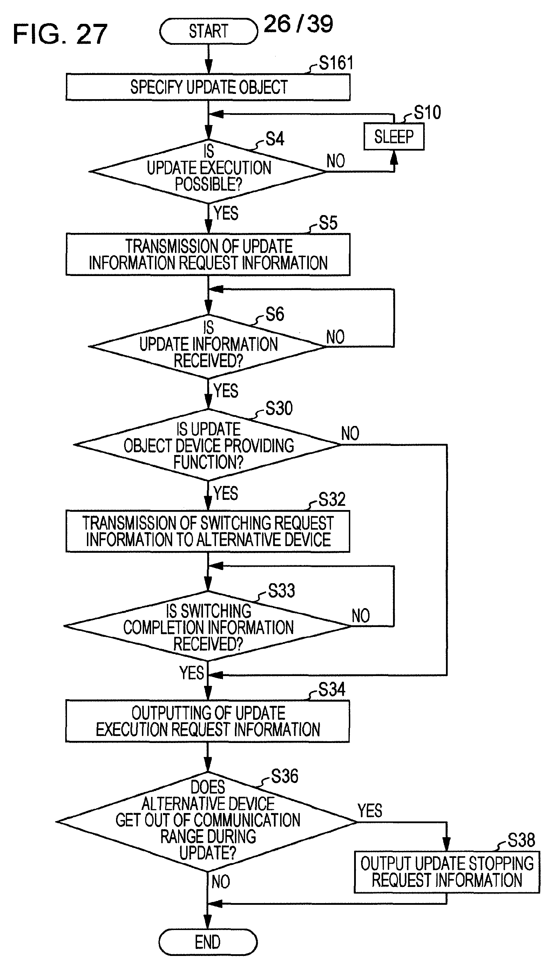

Next, description will be given of an operation of the GW device 104 according to the second embodiment. When the GW device 104 receives the update request information from the global device management apparatus 102 through the network 3, an update determination process illustrated in FIG. 27 is executed in the GW device 104. Furthermore, the update determination process, which is executed by the GW device 104, is an example of the update control method in the technology that is disclosed. Hereinafter, the update determination process will be described in detail.

FIG. 27 is a flowchart illustrating an example of the update determination process. In the flowchart of the update determination process illustrated in FIG. 27, first, in step S161, the update execution determination unit 117 specifies the end device 6 that becomes an update object based on the update request information that is received, and the management device list 94. The subsequent processes are performed with respect to the end device 6 that becomes an update object in the same manner as in the update determination process according to the first embodiment, and thus description thereof will not be repeated.

As described above, according to the second embodiment, the update request is made for only the GW device that manages an end device that becomes an update object, and thus it is possible to update the end device without stopping providing of a function to the GW device.

Furthermore, in the first and second embodiments, description has been made with respect to a case where the alternative search unit of the global device management apparatus extracts a GW device that transmits the search information in a state in which the entirety of GW devices other than a GW device that is a transmission source are set as an object, but there is no limitation thereto. For example, the alternative search unit of the global device management apparatus may extract the GW device 4, which transmits the search information, with limitation to only GW devices which are close to a GW device that is a transmission source.

Next, description will be given of a third embodiment. Furthermore, the same reference numerals will be given portions having the same configuration and the same operation as in the first embodiment, and description thereof will not be repeated.

The third embodiment is different from the first embodiment in that FW of the GW device becomes an update object.

FIG. 2 is an example of an update system 120 according to the third embodiment. As illustrated in FIG. 2, the update system 120 includes a global device management apparatus 122, a GW device 124, and an end device 126.

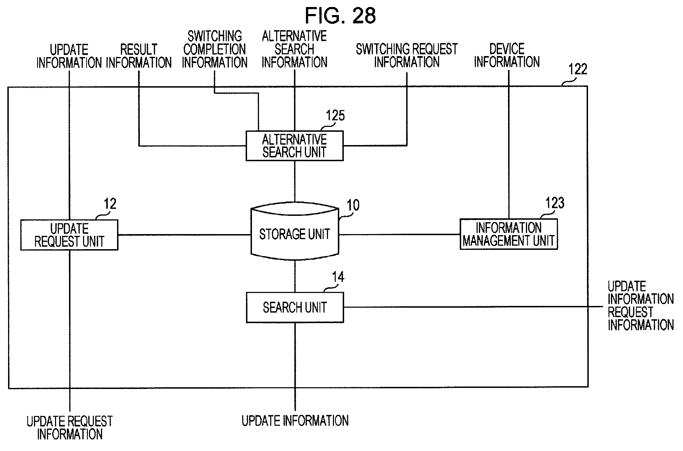

Next, description will be given of the global device management apparatus 122 according to the third embodiment. FIG. 28 illustrates a functional block diagram of the global device management apparatus 122 according to the third embodiment. As illustrated in FIG. 28, the global device management apparatus 122 includes a storage unit 10, an information management unit 123, an update request unit 12, an alternative search unit 125, and a search unit 14.

When receiving device information from the GW device 124 through the network 3, the information management unit 123 updates the GW device list 90 that is illustrated in FIG. 4 and is stored in the storage unit or the end device list 92 that is illustrated in FIG. 5 and is stored in the storage unit 10. Here, examples of the device information include information update information, new addition information, deletion information, and information update information of the GW device. Examples of the information update information of the GW device include a device ID and an FW version of the GW device 124.

When receiving the information update information of the GW device from the GW device 124 through the network 3, the information management unit 123 updates the GW device list 90. Specifically, the information management unit 123 specifies GW device information in which the device ID that is included in the received information update information of the GW device, and information in the "ID" column in the GW device list 90 match each other. In addition, the information management unit 123 substitutes the information in the "FW version" column of the GW device information that is specified with an FW version that is included in the information update information of the GW device. The other configurations of the information management unit 123 are the same as those of the information management unit 11 in the first embodiment, and thus description thereof will not be repeated.

When receiving alternative search information from the GW device 124 through the network 3, the alternative search unit 125 determines whether or not the GW device 124 that is an update object can be updated, and transmits the result to the GW device 124 through the network 3.

Specifically, the alternative search unit 125 determines whether or not end device information corresponding an end device ID exists in the end device list 92 with respect to each device ID of the end device 126 that is included in the alternative search information that is acquired.

Here, first, whether or not the end device information corresponds to the device ID that is included in the alternative search information is determined by the alternative search unit 125 through determination on whether or not the information in the "ID" column of the end device information and the device ID that is included in the alternative search information match each other.

In addition, in a case where information in the "connected GW device" column of the end device information, which is determined as matching information, does not match the device ID of the GW device 124 that is a transmission source of the alternative search information, the alternative search unit 125 determines the end device information as corresponding end device information.

In addition, in a case of determining that corresponding end device information exists with respect to the entirety of device IDs which are included in the alternative search information, the alternative search unit 125 specifies the GW device 124 that manages the end device 126 that corresponds to the device ID.

Here, the alternative search unit 125 specifies the GW device 124, which corresponds to a device ID that is information in the "connected GW device" column of the end device information corresponding to the device ID, as the GW device 124 that corresponds to the device ID. Furthermore, the GW device 124, which is specified, is an alternative GW device.

In addition, for each device ID that is included in the alternative search information, the alternative search unit 125 transmits switching request information, which includes the device ID, to the GW device 124 corresponding to the device ID, through the network 3. Furthermore, a configuration, in which the switching request information is transmitted and a function is provided from the end device that becomes an object to a GW device that becomes an alternative, is a setting example in which a communication device that becomes an alternative of the disclosed technology executes a function of a communication device that executes an update in accordance with an update request.

In addition, in a case of acquiring switching completion information from the entirety of GW devices 124 which transmit the switching request information, the alternative search unit 125 transmits update-possible result information to the GW device 124 that is a transmission source of the alternative search information through the network 3. Furthermore, a configuration, in which the update-possible result information is transmitted, and the GW device that becomes an update object is updated, is an example of executing update in the technology that is disclosed. In addition, an update execution instruction may be transmitted instead of the update-possible result information.

On the other hand, in a case of determining that the corresponding end device information does not exist with respect to at least one device ID that is included in the alternative search information, the alternative search unit 125 transmits update-impossible result information to the GW device 124 that is a transmission source of the alternative search information through the network 3.

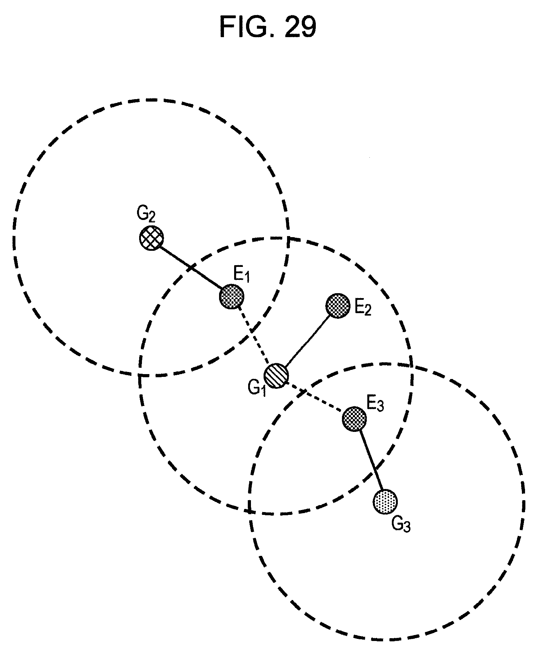

Furthermore, when description is given of the update-impossible case with reference to a case of FIG. 29, it is determined that end devices $E_1$ and $E_3$, which exist under management of GW device $G_1$ that becomes an update object, respectively exist under management of different GW devices $G_2$ and $G_3$. However, an end device $E_2$, which exists under management of the GW device $G_1$, exists under management of only GW device $G_1$. Accordingly, when updating the GW device $G_1$, it is difficult to normally provide a function of the end device $E_2$ during an update of the GW device $G_1$. According to this, with regard to the case illustrated in FIG. 29, it is determined that the GW device 124 is difficult to be updated.

On the other hand, with regard to the case of FIG. 29, in a case where the end device $E_2$ exists under management of a GW device other than the GW device $G_1$ that is an update object, it is determined that the entirety of the end devices $E_1$, $E_2$, and $E_3$ exist under management GW devices different from each other. In this case, the GW device $G_1$, which becomes an update object, can be updated.

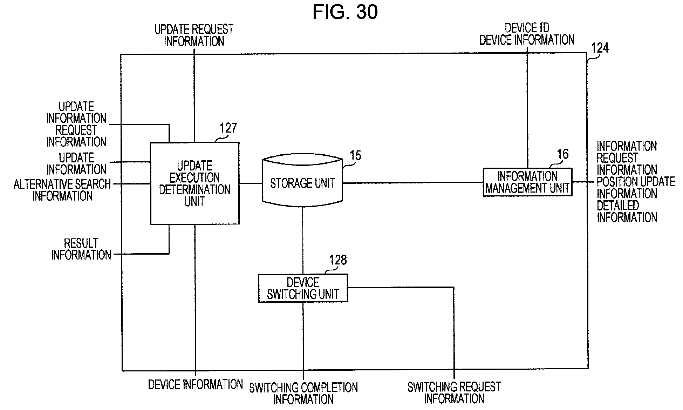

Next, description will be given of the GW device 124 according to the third embodiment. FIG. 30 illustrates a functional block diagram of the GW device 124 according to the third embodiment. As illustrated in FIG. 30, the GW device 124 includes a storage unit 15, an information management unit 16, an update execution determination unit 127, and a device switching unit 128.

When receiving update request information from the global device management apparatus 122 through the network 3, the update execution determination unit 127 determines whether or not the GW device 124 itself becomes an update object.

Specifically, in a case where a device name included in the update request information, and information in the "device name" column of the GW device information that corresponds to the "No." column of "1" in the management device list 94 match each other, the update execution determination unit 127 determines that the GW device 124 itself becomes an update object.

In a case of determining that the GW device 124 itself is an update object, the update execution determination unit 127 transmits information in the "ID" column of the end device information, which is included in the management device list 94, to the global device management apparatus 122 as alternative search information.

In addition, in a case of receiving the update-possible result information, the update execution determination unit 127 transmits update information request information to the global device management apparatus 122 through the network 3.

In addition, in a case of receiving the update-impossible result information, after passage of a predetermined period of time, the update execution determination unit 127 transmits information in the "ID" column of the end device information, which is included in the management device list 94, to the global device management apparatus 122 as the alternative search information. Furthermore, it is assumed that a device ID of the GW device 124, which is a transmission source, is also included in the alternative search information.

In addition, in a case of receiving update information, the update execution determination unit 127 updates the GW device 124 itself based on the update information. In addition, in a case where an update is normally terminated, the update execution determination unit 127 updates information in the "FW version" column of the GW device information, in which information of the "No." column that is included in the management device list 94 is "1", with a current FW version value.

In addition, the update execution determination unit 127 transmits information of a current FW version, and information update information of the GW device, which includes information in the "ID" column of the GW device information in which information of the "No." column that is included in the management device list 94 is "1", to the global device management apparatus 122. Furthermore, information in the "ID" column of the GW device information, in which information of the "No." column is "1", is a device ID of the GW device 124 itself. Furthermore, the update execution determination unit 127 is an example of a specifying unit and an execution unit in the technology that is disclosed.

The device switching unit 128 acquires end device information in which the device ID of the end device 126 included in the switching request information received from the global device management apparatus 122, and the "ID" column of the end device information included in the management device list 94 match each other. In addition,, the device switching unit 128 transmits the switching request information to the end device 126, which corresponds to the acquired end device information, through the private network 5.

In addition, when receiving switching completion information indicating a result in which the end device 126, which receives the switching completion information, is normally switched through the private network 5, the device switching unit 128 transmits the switching completion information to the global device management apparatus 122 through the network 3. Furthermore, the device switching unit 128 is an example of a setting unit in the technology that is disclosed.

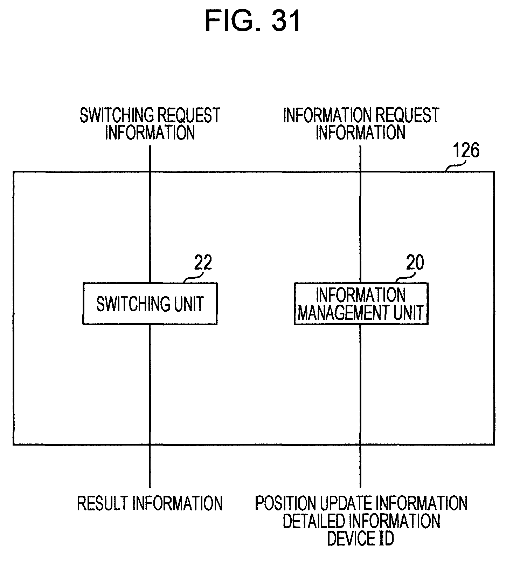

Next, description will be given of the end device 126 according to the third embodiment. FIG. 31 illustrates a functional block diagram of the end device 126 according to the third embodiment. As illustrated in FIG. 31, the end device 126 includes an information management unit 20 and a switching unit 22.

For example, the global device management apparatus 122 can be realized by a computer 230 illustrated in FIG. 10. The computer 230 includes a CPU 202, a memory 234 as a temporary storage region, and a non-volatile storage device 236. The CPU 202, the memory 234, the storage device 236, an input and output I/F 210, an R/W unit 214, and a network I/F 216 are connected to each other through a bus 218.

The storage device 236 can be realized by a hard disk drive (HDD), a solid state drive (SSD), a flash memory, and the like. An update request program 310, an alternative search program 334, an information management program 338, and a search program 324, which allow the computer 230 to function as the global device management apparatus 122, are stored in the storage device 236 as a storage medium. In addition, the storage device 236 includes a storage region 328 in which the GW device information, the end device information, and the update information are stored.

The CPU 202 reads out the update request program 310, the alternative search program 334, the information management program 338, and the search program 324 from the storage device 236, and develops the programs in the memory 234. In addition, the CPU 202 sequentially executes processes of the update request program 310, the alternative search program 334, the information management program 338, and the search program 324.

In addition, the CPU 202 reads out each piece of GW device information that is stored in the storage region 328, and develops the GW device information in the memory 234 as the GW device list 90. In addition, the CPU 202 reads out each piece of end device information that is stored in the storage region 328, and develops the end device information in the memory 234 as the end device list 92.

The alternative search program 334 includes an alternative search process 336.

The CPU 202 operates as the alternative search unit 125 illustrated in FIG. 28 by executing the alternative search program 334.

The information management program 338 includes an information management process 340.

The CPU 202 operates as the information management unit 123 illustrated in FIG. 28 by executing the information management process 340.

In addition, the other programs are the same as in the first embodiment, and thus description thereof will not be repeated.

According to this, the computer 230, which executes the update request program 310, the alternative search program 334, the information management program 338, and the search program 324, functions as the global device management apparatus 122.

Furthermore, for example, the global device management apparatus 122 can be realized by a semiconductor integrated circuit, and more specifically, an application specific integrated circuit (ASIC) and the like.

In addition, for example, the GW device 124 can be realized by a computer 430 that is illustrated in FIG. 11. As is the case with the computer 200, the computer 430 includes a CPU 402, a memory 434, a storage device 436, an input and output I/F 410, an R/W unit 414, and a network I/F 416 which are connected to each other through a bus 418. The CPU 402 may be a microprocessor or any other kind of processor.

The storage device 436 can be realized by a hard disk drive (HDD), a solid state drive (SSD), a flash memory, and the like. An update execution determination program 540, an information management program 520, and a device switching program 546, which allow the computer 430 to function as the GW device 124, are stored in the storage device 436 as a storage medium. In addition, the storage device 436 includes a storage region 530 in which the GW device information and the end device information are stored.

The CPU 402 reads out the update execution determination program 540 from the storage device 436, and develops the update execution determination program 540 in the memory 434. In addition, the CPU 402 sequentially executes processes of the update execution determination program 540.

In addition, the CPU 402 reads out the GW device information and the end device information which are stored in the storage region 530, and develops the GW device information and the end device information in the memory 434 as the management device list 94.

The update execution determination program 540 includes an update request process 542.

The CPU 402 operates as the update execution determination unit 127 illustrated in FIG. 30 by executing the update request process 542.

The CPU 402 operates the device switching unit 128 illustrated in FIG. 30 by executing a device switching process 548.

According to this, the computer 430, which executes the update execution determination program 510, the information management program 520, and the device switching program 546, functions as the GW device 124.

Furthermore, for example, the GW device 124 can be realized by a semiconductor integrated circuit, and more particularly, an application specific integrated circuit (ASIC) and the like.

In addition, for example, the end device 126 can be realized by a computer 620 that is illustrated in FIG. 12. As is the case with the computer 200, the computer 620 includes a CPU 602, a memory 604, a storage device 606, an input and output I/F 610, an R/W unit 614, and a network I/F 616 which are connected to each other through a bus 618.

The storage device 606 can be realized by a hard disk drive (HDD), a solid state drive (SSD), a flash memory, and the like. A switching program 714 and an information management program 718, which allow the computer 620 to function as the end device 126, are stored in the storage device 606 as a storage medium.

Next, description will be given of each process in each of the global device management apparatus 122, the GW device 124, and the end device 126. In addition, the same reference numerals will be given to the same processes as in the first embodiment, and description thereof will not be repeated.

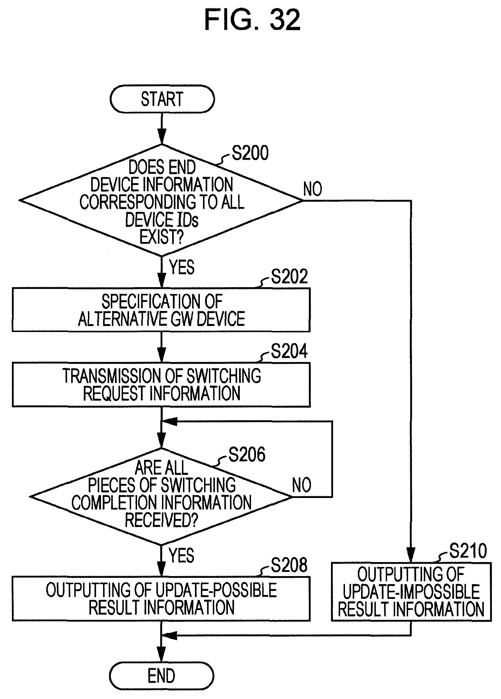

First, description will be given of an operation of the global device management apparatus 122 according to the third embodiment. When the global device management apparatus 122 receives alternative search information from the GW device 124 through the network 3, an alternative search process illustrated in FIG. 32 is executed by the alternative search unit 125. In addition, the alternative search process, which is executed in the global device management apparatus 122, is an example of an update control method.

FIG. 32 is a flowchart illustrating an example of the alternative search process. In the flowchart of the alternative search process illustrated in FIG. 32, first, in step S200, the alternative search unit 125 determines whether or not a plurality of pieces of end device information, which correspond to the entirety of device IDs included in the alternative search information that is received, exist based on the end device list 92. In a case where the alternative search unit 125 determines that the plurality of pieces of end device information, which correspond to the entirety of device IDs, exist, the alternative search process proceeds to step S202. On the other hand, in a case where the alternative search unit 125 determines that end device information corresponding to at least one device ID does not exist, the alternative search process proceeds to step S210.

Next, in step S202, the alternative search unit 125 specifies an alternative GW device that corresponds to each of the device IDs which are included in the alternative search information that is acquired.

Next, in step S204, for each of the device IDs which are included in the alternative search information that is acquired, the alternative search unit 125 transmits switching request information to the corresponding alternative GW device that is specified in step S202 through the network 3.

Next, in step S206, the alternative search unit 125 determines whether or not switching completion information is received from the entirety of alternative GW devices which transmit the switching request information in step S204. In a case where the alternative search unit 125 determines that the switching completion information is received from the entirety of alternative GW devices, the alternative search process proceeds to step S208. On the other hand, in a case where the alternative search unit 125 determines that the switching completion information is not received from the entirety of alternative GW devices, the alternative search process repeats step S206.

Next, in step S208, the alternative search unit 125 transmits update-possible result information to the GW device 124 that is a transmission source of the alternative search information through the network 3, and the alternative search process is terminated.

In step S210, the alternative search unit 125 transmits update-impossible result information to the GW device 124 that is a transmission source of the alternative search information through the network 3, and the alternative search process is terminated.

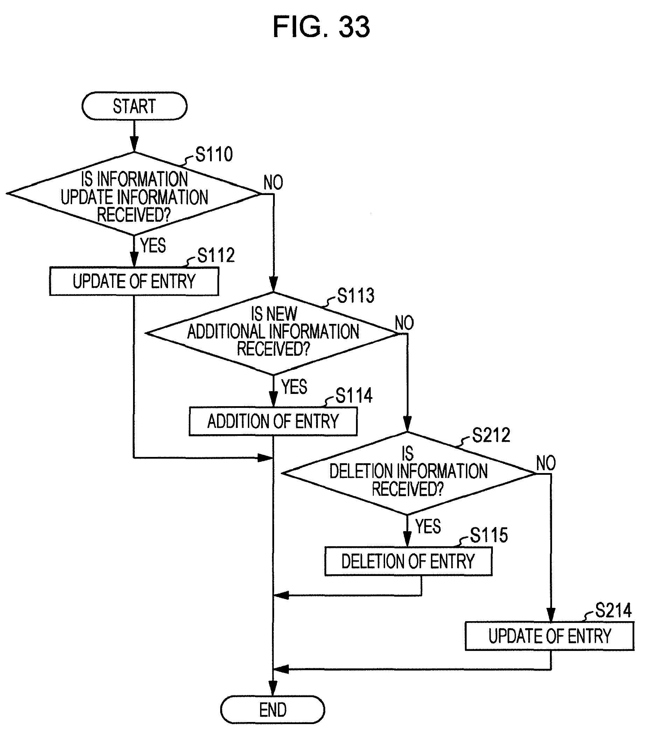

In addition, when the global device management apparatus 122 receives the device information that is transmitted from the GW device 124, an information management process illustrated in FIG. 33 is executed in the global device management apparatus 122.

FIG. 33 is a flowchart illustrating an example of the information management process. In the flowchart of the information management process illustrated in FIG. 33, first, in step S110, the information management unit 123 determines whether or not the device information, which is received, is information update information. With regard to the subsequent information management processes, description of the same process as in the first embodiment will not be repeated.

In step S212, the information management unit 123 determines whether or not the device information, which is received, is deletion information. In a case where the information management unit 123 determines that the received device information is the deletion information, the information management process proceeds to step S115. On the other hand, in a case where the information management unit 123 determines that the received device information is not the deletion information, the information management process proceeds to step S214.

Next, in step S214, the information management unit 123 updates an FW version, which is included in the GW device list 90, of GW device information of an entry that becomes an object based on the information update information of the GW device which is acquired in step S123, and the information management process is terminated.

Furthermore, the other processes of the global device management apparatus 122 are the same as corresponding processes of the global device management apparatus 2 according to the first embodiment, and thus description thereof will not be repeated.

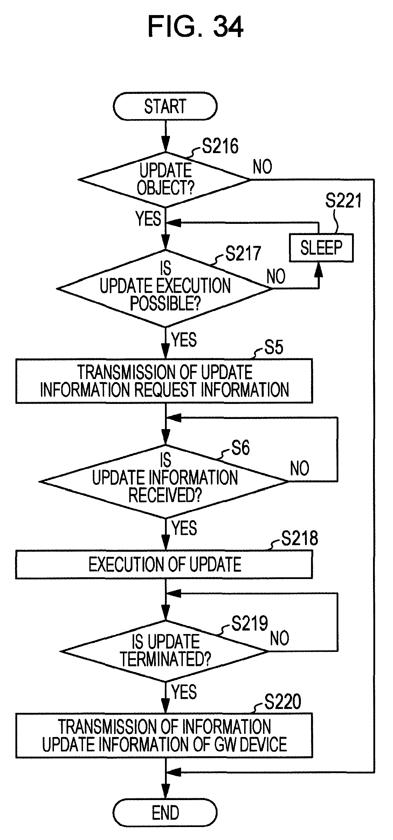

Next, description will be given of an operation of the GW device 124 according to the third embodiment. When the GW device 124 receives update request information from the global device management apparatus 122 through the network 3, an update process illustrated in FIG. 34 is executed in the GW device 124.

FIG. 34 is a flowchart illustrating an example of the update process. In the flowchart of the update process illustrated in FIG. 34, first, in step S216, the update execution determination unit 127 determines whether or not the GW device 124 itself is an update object based on the update request information that is received, and the management device list 94. In a case where the update execution determination unit 127 determines that the GW device 124 itself is an update object, the update process proceeds to step S217. On the other hand, in a case where the update execution determination unit 127 determines that the GW device 124 itself is not an update object, the update process is terminated.

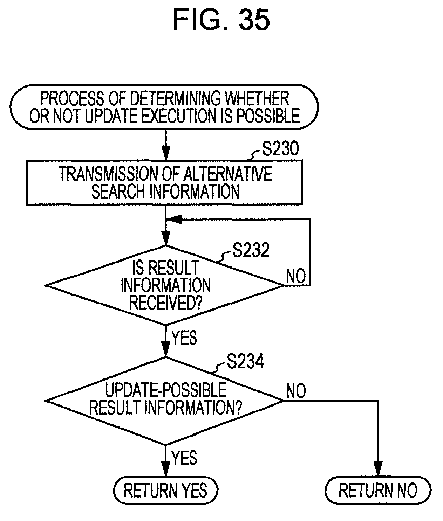

Next, in step S217, the update execution determination unit 127 determines whether or not the GW device 124 itself can execute an update. In a case where the update execution determination unit 127 determines that the GW device 124 itself can execute an update, the update process proceeds to step S5. On the other hand, in a case where the update execution determination unit 127 determines that the GW device 124 itself is difficult to execute an update, the update process proceeds to step S221, and proceeds to a process in step S217 after a predetermine period of time. Furthermore, step S217 will be described below in detail with reference to FIG. 35. In addition, steps S5 and S6 in FIG. 34 are the same as the update determination process according to the first embodiment, and thus description thereof will not be repeated.

In step S230 of a process of determining whether or not update execution is possible in FIG. 35, the update execution determination unit 127 transmits the alternative search information to the global device management apparatus 122 through the network 3 based on the management device list 94.

Next, in step S232, the update execution determination unit 127 determines whether or not result information is received from the global device management apparatus 122. In a case where the update execution determination unit 127 determines that the result information is received, the process of determining whether or not update execution is possible proceeds to step S234. On the other hand, the update execution determination unit 127 determines that the result information is not received, the process of determining whether or not update execution is possible repeats the process in step S232.

Next, in step S234, the update execution determination unit 127 determines whether or not the result information, which is acquired in step S232, is update-possible result information. In a case where the update execution determination unit 127 determines that the result information is the update-possible result information, the process of determining whether or not update execution is possible is terminated by returning "Yes". On the other hand, in a case where the update execution determination unit 127 determines that the result information is update-impossible result information, the process of determining whether or not update execution is possible is terminated by returning "No".

Next, in step S218 of the update process in FIG. 34, the update execution determination unit 127 updates the GW device 124 itself based on the update information that is received in step S6.

Next, in step S219, the update execution determination unit 127 determines whether or not an update of the GW device 124 itself is terminated. In a case where the update execution determination unit 127 determines that the update is terminated, the update process proceeds to step S220. On the other hand, in a case where the update execution determination unit 127 determines that the update is not terminated, the update process repeats the process in step S219.

Next, in step S220, the update execution determination unit 127 transmits the information update information of a GW device to the global device management apparatus 122 through the network 3 based on the FW version of the GW device 124 itself after an update, and the update process is terminated.

In addition, when the GW device 124 receives the switching request information that is transmitted from the global device management apparatus 122, the GW device 124 transmits the switching request information to the end device 126 that becomes an object. In addition, when the GW device 124 receives the switching completion information from the end device 126, the GW device 124 transmits the switching completion information to the global device management apparatus 122. Furthermore, the other processes of the GW device 124 are the same as corresponding processes of the GW device 4 according to the first embodiment, and thus description thereof will not be repeated.

As described above, according to the third embodiment, a function of an end device, which is providing a function to a GW device that is an update object, is provided to a different GW device. According to this, even when updating the GW device that is an update object, it is possible to perform an update of the GW device without stopping providing of a function that is provided from an end device that is providing a function to the GW device that is an update object.

Next, description will be given of a fourth embodiment. Furthermore, the same reference numerals will be given portions having the same configuration and the same operation as in the first to third embodiments, and description thereof will not be repeated.

The fourth embodiment is different from the third embodiment in that when a global device management apparatus receives update information, update request information is transmitted to only a GW device that becomes an update object.

FIG. 2 is an example of an update system 130 of the fourth embodiment. As illustrated in FIG. 2, the update system 130 includes a global device management apparatus 132, a GW device 134, and an end device 126.

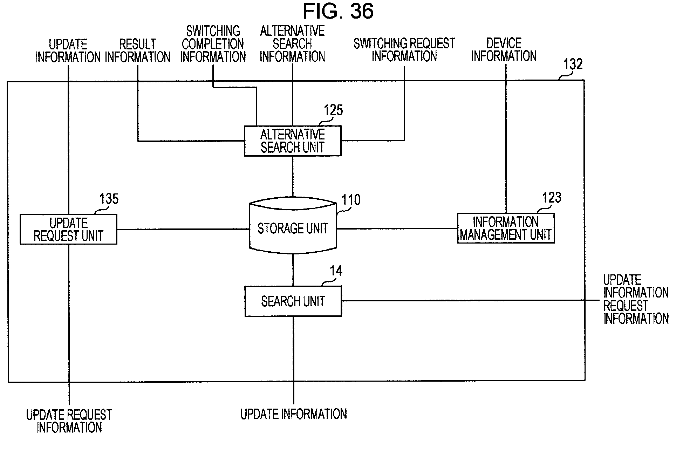

Next, description will be given of the global device management apparatus 132 according to the fourth embodiment. FIG. 36 illustrates a functional block diagram of the global device management apparatus 132 according to the fourth embodiment. As illustrated in FIG. 36, global device management apparatus 132 includes a storage unit 110, an information management unit 123, an update request unit 135, an alternative search unit 125, and a search unit 14.

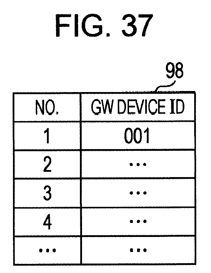

When receiving update information from an arbitrary site (not illustrated) that provides update information through the network 3, for example, the update request unit 135 creates an update object list 98, which includes information of the GW device 134 that is an update object, illustrated in FIG. 37. In addition, the update request unit 135 stores the update object list 98, which is created, in the storage unit 110.

Specifically, the update request unit 135 acquires each piece of GW device information included in the GW device list 90 that is stored in the storage unit 110. In addition, with respect to each piece of the GW device information that is acquired, the update request unit 135 specifies GW device information in which the "device name" column of the GW device information and a device name that is included in the acquired update information match each other. In addition, with respect to each piece of the GW device information that is specified, the update request unit 135 stores information in the "ID" column of the GW device information in a "GW device ID" column of the update object list 98 that is stored in the storage unit 110.

In addition, the update request unit 135 transmits update request information to each of a plurality of the GW devices 134 which become an update object based on the update object list 98 that is stored in the storage unit 110. Specifically, the update request unit 135 transmits the update request information to the GW device 134 that corresponds to each piece of information in the "GW device ID" column of the update object list 98.

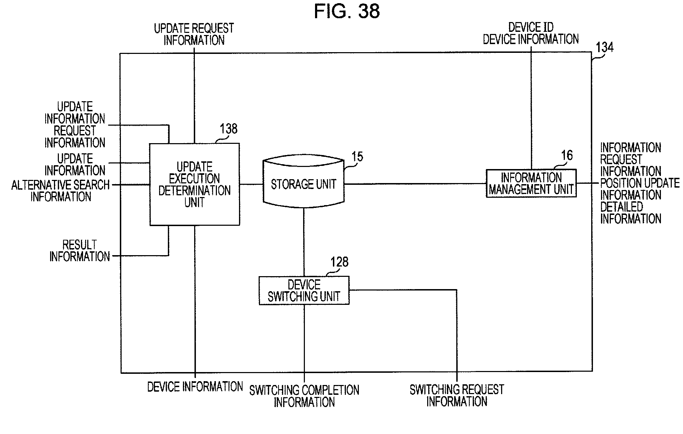

Next, description will be given of the GW device 134 according to the fourth embodiment. FIG. 38 illustrates a functional block diagram of the GW device 134 according to the fourth embodiment. As illustrated in FIG. 38, the GW device 134 includes a storage unit 15, an information management unit 16, an update execution determination unit 138, and a device switching unit 128.

When receiving the update request information from the global device management apparatus 132, the update execution determination unit 138 transmits each piece of information in the "ID" column of the end device information that is included in the management device list 94 to the global device management apparatus 132 as alternative search information. Furthermore, the other processes of the update execution determination unit 138 are the same as in the update execution determination unit 127 according to the third embodiment, and thus description thereof will not be repeated.

For example, for example, the global device management apparatus 132 can be realized by a computer 240 that is illustrated in FIG. 10. The computer 240 includes a CPU 202, a memory 244 as a temporary storage region, and a non-volatile storage device 246. The CPU 202, the memory 244, the storage device 246, an input and output I/F 210, an R/W unit 214, and a network I/F 216 are connected to each other through a bus 218.

The storage device 246 can be realized by a hard disk drive (HDD), a solid state drive (SSD), a flash memory, and the like. An update request program 341 and the same program in the third embodiment, which allow the computer 240 to function as the global device management apparatus 132, are stored in the storage device 246 as a storage medium. In addition, the storage device 246 includes a storage region 339 in which GW device information, end device information, update object information, and update information are stored.

The CPU 202 reads out the update request program 341, the alternative search program 334, the information management program 338, and the search program 324 from the storage device 246, and develops the programs in the memory 244. In addition, the CPU 202 sequentially executes processes of the update request program 341, the alternative search program 334, the information management program 338, and the search program 324.

In addition, the CPU 202 reads out each piece of GW device information that is stored in the storage region 339, and develops the GW device information in the memory 244 as the GW device list 90. In addition, the CPU 202 reads out each piece of end device information that is stored in the storage region 339, and develops the end device information in the memory 244 as the end device list 92. In addition, the CPU 202 reads out each piece of update information that is stored in the storage region 339, and develops the update information in the memory 244 as the update object list 98.

The update request program 341 includes an update request process 342.

The CPU 202 operates as the alternative search unit 125 illustrated in FIG. 36 by executing the update request process 342.

Furthermore, the other programs are the same as in the third embodiments, and thus description thereof will not be repeated.

According to this, the computer 240, which executes the update request program 341, the alternative search program 334, the information management program 338, and the search program 324, functions as the global device management apparatus 132.

Furthermore, for example, the global device management apparatus 132 can be realized by a semiconductor integrated circuit, and more specifically, an application specific integrated circuit (ASIC) and the like.

In addition, for example, the GW device 134 can be realized by a computer 440 that is illustrated in FIG. 11. As is the case with the computer 200, the computer 440 includes a CPU 402, a memory 444, a storage device 446, an input and output I/F 410, an R/W unit 414, and a network I/F 416 which are connected to each other through a bus 418.

The storage device 446 can be realized by a hard disk drive (HDD), a solid state drive (SSD), a flash memory, and the like. An update execution determination program 550, an information management program 520, and a device switching program 546, which allow the computer 440 to function as the GW device 134, are stored in the storage device 446 as a storage medium. In addition, the storage device 446 includes a storage region 530 in which GW device information and end device information are stored.

The CPU 402 reads out the update execution determination program 550 from the storage device 446, and develops the update execution determination program 550 in the memory 444. In addition, the CPU 402 sequentially executes processes of the update execution determination program 550.

In addition, the CPU 402 reads out the GW device information and the end device information, which are stored in the storage region 530, and develops the GW device information and the end device information in the memory 444 as the management device list 94.

The update execution determination program 550 includes an update request process 552.

The CPU 402 operates as the update execution determination unit 138 illustrated in FIG. 38 by executing the update request process 552. Furthermore, the other programs are the same as in the third embodiment, and thus description thereof will not be repeated.

According to this, the computer 440, which executes the update execution determination program 550, the information management program 520, and the device switching program 546, functions as the GW device 134.

Furthermore, for example, the GW device 134 can be realized by a semiconductor integrated circuit, and more particularly, an application specific integrated circuit (ASIC) and the like.

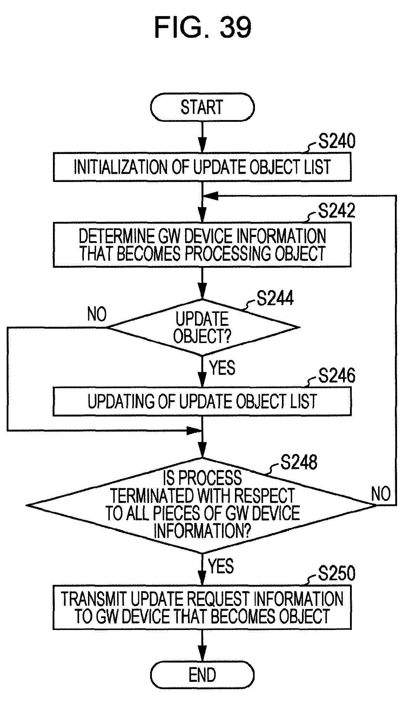

Next, description will be given of an operation of the global device management apparatus 132 according to the fourth embodiment. When the global device management apparatus 132 receives the update information from an arbitrary site through the network 3, an update request process illustrated in FIG. 39 is executed in the global device management apparatus 132. Furthermore, the other processes are the same as in the global device management apparatus 122 according to the third embodiment, and thus description thereof will not be repeated.

FIG. 39 is a flowchart illustrating an example of the update request process. In the flowchart of the update request process illustrated in FIG. 39, first, in step S240, the update request unit 135 initializes the update object list 98 that is stored in the storage unit 110.

Next, in step S242, the update request unit 135 acquires GW device information that becomes a processing object from the GW device information included in the GW device list 90 that is stored in the storage unit 110.

Next, in step S244, the update request unit 135 determines whether or not a "device name" column of the GW device information acquired in step S242 matches a device name of update information that is acquired and becomes an update object. In a case where the update request unit 135 makes a determination as the update object, the update request process proceeds to step S246. On the other hand, in a case where the update request unit 135 makes a determination as not update object, the update request process proceeds to step S248.

Next, in step S246, the update request unit 135 stores information in the "ID" column of the GW device information, which is acquired in step S242, in the "GW device ID" column of the update object list 98 as a new entry.

Next, in step S248, with respect to the entirety of a plurality of pieces of GW device information which are included in the GW device list 90, the update request unit 135 determines whether or not the processes from step S242 to step S244 or step S246 are terminated. In a case where the update request unit 135 determines that the processes are terminated with respect to the entirety of the plurality of pieces of GW device information, the update request process proceeds to step S250. On the other hand, in a case where the update request unit 135 determines that the processes are not terminated with respect to the entirety of the plurality of pieces of GW device information, the update request process proceeds to step S242, and repeats the processes from step S244 to step S248 by changing the GW device information that becomes a processing object.

Next, in step S250, the update request unit 135 transmits update request information to each of a plurality of the GW devices 134, which become an update object, based on the update object list 98 that is update in step S246, and the update request process is terminated.

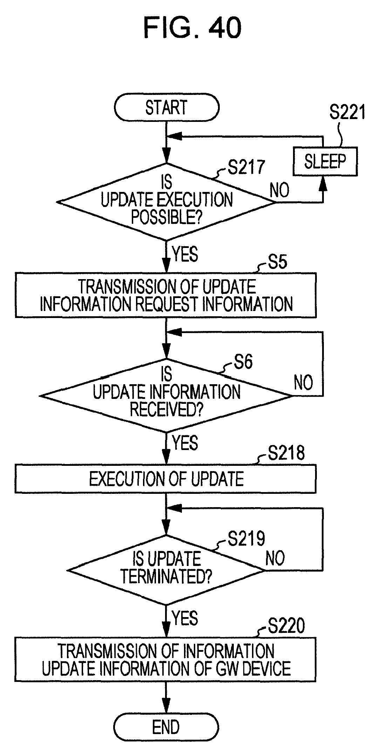

Next, description will be given of an operation of the GW device 134 according to the fourth embodiment. When the GW device 134 receives the update request information from the global device management apparatus 132 through the network 3, an update process illustrated in FIG. 40 is executed in the GW device 134. Furthermore, the update process illustrated in FIG. 40 corresponds to a process in which a part of the update process according to the third embodiment is deleted, and thus description thereof will not be repeated.

As described above, according to the fourth embodiment, query of whether or not an update is possible is made with respect to only a GW device that is an update object. According to this, it is possible to perform an update of the GW device without stopping providing of a function that is being provided from an end device that is providing the function to the GW device that is an update object.

In addition, with respect to the first to fourth embodiments, description has been given of a case where the update information includes an FW version, a device name, an FW updating file, and an update duration are included, but there is no limitation thereto. For example, arbitrary different information can be used as long as a device of an update object can be specified. In addition, the update duration may be calculated for each device that becomes an update object in accordance with other methods.

In addition, in the first to fourth embodiments, description has been given of a case where a GPS is used to acquire position information of a device, but there is no limitation thereto. For example, the position information of the device may be acquired by using other methods.

In addition, in the first to fourth embodiments, description has been given of a case where a data retention type is set to a list type, but there is no limitation thereto. For example, other data retention types such as a table may be used.

In addition, in the third and fourth embodiment, determination is made on whether or not end device information, which corresponds to each of device IDs included in alternative search information, exists based on an end device list that is stored in a global device management apparatus, but there is no limitation thereto. For example, query may be made for each of GW devices other than a transmission source of alternative search information, and determination may be made on whether or not end device information, which corresponds to each of device IDs included in the alternative search information, exists in a management device list of the GW device. In this case, with regard to the entirety of device IDs included in the alternative search information, in a case where corresponding end device information exists in the management device list stored in a GW device other than the transmission source of the alternative search information, the GW device, which corresponds to each of the device IDs, is specified. Here, the GW device that is specified is a GW device which retains the end device information, which corresponds to the device ID, in the management device list. The GW device in which the end device information, which corresponds to the device ID, is retained in the management device list may be determined based on a query result. According to this, for each of the device IDs which are included in the alternative search information, the alternative search unit transmits switching request information, which includes the device ID, to the GW device that corresponds to the device ID through a network.

In addition, in the third and fourth embodiments, description has been given of a case where the GW device transmits information of the device ID of the end device information to the global device management apparatus as alternative search information in a case where the GW device itself is determined as an update object, but there is no limitation thereto. For example, in a case where the GW device itself is determined as an update object, the GW device may transmit information of the device ID included in the GW device information of the GW device itself to the global device management apparatus as alternative search information. In this case, in the global device management apparatus, first, the global device management apparatus acquires each piece of end device information, in which a device ID of a GW device that is an acquired update object is stored in the "connected GW device" column, from the end device list. Next, each piece of information in the "ID" column of the acquired end device information is set as alternative search information in the third and fourth embodiments, and then the above-described processes in the third and fourth embodiments are executed.

In addition, the description has been given of an aspect in which respective programs relating to the disclosed technology are stored (installed) in a storage device in advance, but there is no limitation thereto. The respective programs relating to the disclosed technology may be provided in a type of being recorded in a recording medium such as a CD-ROM, a DVD-ROM, and a USB memory.

### Claims

1.  An update control program that causes a computer to execute a process comprising:

    determining, when acquiring information relating to an update request including information configured to identify a communication device, whether or not the communication device acquires predetermined information and executes an update in accordance with the update request by referring to a device information management table that manages information configured to identify the communication device that executes a predetermine function;
    specifying another communication device, which becomes an alternative of the communication device that executes the update, based on a function and position information of the another communication device which are included in the device information management table, when the communication device which executes the update is determined to acquire the predetermined information;
    making a setting so as to acquire the predetermined information from the another communication device that becomes the specified alternative; and
    executing the update with respect to the communication device that executes the update in accordance with the update request.

2.  The update control program according to claim 1,
    wherein in the specifying of the another communication device that becomes the alternative of the communication device that executes the update, in a case where the communication device that becomes the alternative is not specified, the specifying of the communication device, which becomes the alternative, is repeated for a predetermined period of time until the communication device, which becomes the alternative, is specified.

3.  The update control program according to claim 1,
    wherein in the specifying of the another communication device, the another communication device that is to be capable of acquiring the predetermined information, and to exist in a communication available range until the update of the communication device that executes the update, is specified as the another communication device that becomes the alternative, based on the function and the position information of the another communication device which are included in the device information management table.

4.  An update control program that causes a computer to execute a process comprising:

    specifying a communication device, which becomes an alternative of a gateway device that executes an update, by referring to a device information management table that manages information configured to identify a communication device that execute a predetermined function and a lower device coupled thereto, when receiving information relating to an update request including information configured to identify the gateway device; making setting in order for the communication device, which becomes the alternative that is specified, to execute a function of the gateway device that executes an update in accordance with the update request; and executing the update with respect to the gateway device that executes the update in accordance with the update request.

5. The update control program according to claim 4, wherein in the specifying, the communication device, which is coupled to the lower device which is also coupled to the gateway device that executes the update, is specified as the communication device that becomes the alternative.

6. The update control program according to claim 4, the process further comprising:

   determining whether or not a communication device, which is the gateway device that executes an update in accordance with the update request, exists with reference to the device information management table when acquiring information relating to the update request, and
   in a case where the communication device is determined not to exist, the specifying is not to be executed.

7. The update control program according to claim 4, wherein in the specifying of the communication device that becomes the alternative of the gateway device that executes the update, in a case where the communication device that becomes the alternative is not specified, the specifying of the communication device is repeated for a predetermined period of time until the communication device, which becomes the alternative, is specified.

8. An update control apparatus for controlling an update of a communication device, the apparatus comprising; a memory and, a processor coupled to the memory and configured to execute a process comprising:

   determining whether or not the communication device, which acquires predetermined information and executes the update in accordance with an update request, exists by referring to a device information management table that manages information configured to identify the communication device that executes a predetermine function when acquiring information relating to the update request including information configured to identify the communication device;
   specifying another communication device, which becomes an alternative of the communication device that executes the update, based on the function and position information of the another communication device which are included in the device information management table, when the communication device, which executes the update in accordance with the update request, is determined to exists;
   making a setting so as to acquire the predetermined information of the communication device, which executes the update in accordance with the update request, from the another communication device that becomes the specified alternative; and
   executing the update with respect to the communication device that executes the update in accordance with the update request.

FIG. 1

FIG. 2

1, 100, 120, 130

8

4, 104, 124, 134

GW DEVICE

END DEVICE — 6, 126

END DEVICE — 6, 126

5

2, 102, 122, 132

GLOBAL DEVICE
MANAGEMENT
APPARATUS

3

7

4, 104, 124, 134

GW DEVICE

END DEVICE — 6, 126

END DEVICE — 6, 126

5

8

# FIG. 3

ALTERNATIVE RESULT
INFORMATION

UPDATE
INFORMATION

SEARCH RESULT
INFORMATION

ALTERNATIVE
SEARCH INFORMATION

SEARCH
INFORMATION

DEVICE
INFORMATION

2

13

ALTERNATIVE
SEARCH UNIT

12

10

11

UPDATE
REQUEST UNIT

STORAGE UNIT

INFORMATION
MANAGEMENT UNIT

UPDATE
INFORMATION
REQUEST
INFORMATION

14

SEARCH UNIT

UPDATE REQUEST
INFORMATION

UPDATE INFORMATION

# FIG. 4

90

| NO. | ID | DEVICE NAME | FUNCTION | FW VERSION |
|---|---|---|---|---|
| 1 | 001 | AA | CAMERA | 1.05 |
| 2 | 002 | BB | DISPLAY | 2.3 |
| ... | ... | | ... | ... |

# FIG. 5

92

| NO. | ID | DEVICE NAME | FUNCTION | FW VERSION | CONNECTED GW DEVICE |
|---|---|---|---|---|---|
| 1 | 101 | xx | TEMPERATURE ACQUISITION | 1.0 | 001 |
| 2 | 102 | yy | WIND POWER ACQUISITION | 3 | 003 |
| ... | ... | | ... | ... | ... |

## FIG. 6

UPDATE REQUEST INFORMATION

SEARCH INFORMATION

SEARCH RESULT INFORMATION

DEVICE ID DEVICE INFORMATION

4

18

ALTERNATIVE SEARCH UNIT

UPDATE INFORMATION REQUEST INFORMATION

UPDATE INFORMATION

ALTERNATIVE SEARCH INFORMATION

ALTERNATIVE RESULT INFORMATION

17

UPDATE EXECUTION DETERMINATION UNIT

15

STORAGE UNIT

16

INFORMATION MANAGEMENT UNIT

INFORMATION REQUEST INFORMATION
POSITION UPDATE INFORMATION
DETAILED INFORMATION

19

DEVICE SWITCHING UNIT

UPDATE TERMINATION INFORMATION

UPDATE EXECUTION REQUEST INFORMATION

UPDATE STOPPING REQUEST INFORMATION

UPDATE TIME INFORMATION

SWITCHING REQUEST INFORMATION

SWITCHING COMPLETION INFORMATION

FIG. 7

94

| NO. | ID | FUNCTION | RELATIVE POSITION | RELATIVE VELOCITY | RELATIVE MOVEMENT DIRECTION | COEFFICIENT | STATUS | COMMUNICATION AVAILABLE RANGE | DEVICE NAME | FW VERSION |
|---|---|---|---|---|---|---|---|---|---|---|
| 1 | 001 | CAMERA | (0,0) | 0 | — | — | — | 200 | AA | 1.05 |
| 2 | 103 | TEMPERATURE ACQUISITION | (3,4) | 50 | 30° | 0.2 | IN USE | 60 | z3 | 1.0 |
| 3 | 105 | TEMPERATURE ACQUISITION | (0,20) | 40 | 120° | 0.2 | IN UPDATE | 40 | p5 | 3 |
| 4 | 110 | TEMPERATURE ACQUISITION | (4,5) | 40 | 15° | 0.2 | USABLE | 60 | q10 | 1.0 |
| ... | ... | ... | ... | ... | ... | ... | ... | ... | | ... |

# FIG. 8

# FIG. 9

UPDATE EXECUTION
REQUEST INFORMATION

SWITCHING REQUEST
INFORMATION

INFORMATION
REQUEST INFORMATION

6

UPDATE STOPPING
REQUEST INFORMATION

21
| UPDATE
EXECUTION UNIT |

22
| SWITCHING UNIT |

20
| INFORMATION
MANAGEMENT UNIT |

UPDATE
TERMINATION
INFORMATION

UPDATE TIME
INFORMATION

SWITCHING COMPLETION
INFORMATION

POSITION UPDATE INFORMATION
DETAILED INFORMATION
DEVICE ID

# FIG. 10

INPUT AND OUTPUT DEVICE  208

212

200, 220, 230, 240

202  CPU

210  INPUT AND OUTPUT I/F

214  R/W UNIT

216  NETWORK I/F

218

STORAGE DEVICE

310, 330, 341

UPDATE REQUEST PROGRAM

UPDATE REQUEST PROCESS — 312, 332, 342

314, 334

ALTERNATIVE SEARCH PROGRAM

ALTERNATIVE SEARCH PROCESS — 316, 336

318, 338

INFORMATION MANAGEMENT PROGRAM

INFORMATION MANAGEMENT PROCESS — 320, 340

324

SEARCH PROGRAM

SEARCH PROCESS — 326

STORAGE REGION — 328, 339 — 206, 226, 236, 246

MEMORY

204, 224, 234, 244

# FIG. 11

408 — INPUT AND OUTPUT DEVICE

412

400, 420, 430, 440

402 — CPU

410 — INPUT AND OUTPUT I/F

414 — R/W UNIT

416 — NETWORK I/F

418

STORAGE DEVICE

510, 531, 540, 550

MEMORY

UPDATE EXECUTION DETERMINATION PROGRAM

UPDATE REQUEST PROCESS — 512, 532, 542, 552

DEVICE SWITCHING PROCESS — 514

516

ALTERNATIVE SEARCH PROGRAM

ALTERNATIVE SEARCH PROCESS — 518

520

INFORMATION MANAGEMENT PROGRAM

INFORMATION MANAGEMENT PROCESS — 522

546

DEVICE SWITCHING PROGRAM

DEVICE SWITCHING PROCESS — 548

STORAGE REGION — 530

406, 426, 436, 446

404, 424, 434, 444

# FIG. 12

```
                    608 ⌒  ┌──────────────┐              ◎ ⌒ 612          600, 620
                           │   INPUT AND   │                                  ↙
                           │ OUTPUT DEVICE │
                           └──────────────┘
      602                         610                614              616
   ┌────────┐           ┌──────────────┐      ┌──────────┐      ┌──────────┐
   │  CPU   │           │  INPUT AND   │      │ R/W UNIT │      │ NETWORK  │
   └────────┘           │ OUTPUT I/F   │      └──────────┘      │   I/F    │
                        └──────────────┘                       └──────────┘
                                                                              618
```

STORAGE DEVICE

710

UPDATE EXECUTION PROGRAM

UPDATE EXECUTION PROCESS ⌒712

714

SWITCHING PROGRAM

SWITCHING PROCESS ⌒716

718

INFORMATION MANAGEMENT PROGRAM

INFORMATION MANAGEMENT PROCESS ⌒720

MEMORY

604

⌒606

# FIG. 13

# FIG. 14

```
                    ( START )
                        |
                        v
        ┌──────────────────────────────────┐  ┌S49
        │ DETERMINATION OF GW DEVICE THAT   │
        │   BECOMES PROCESSING OBJECT       │
        └──────────────────────────────────┘
                        |
                        v
                   /‾‾‾‾‾‾‾‾‾‾\  ┌S50
                  / IS ALTERNATIVE \        NO
                 < DEVICE CANDIDATE PRESENT UNDER >──────┐
                  \  MANAGEMENT?  /                      │
                   _____/                          │
                        | YES                            │
                        v                                │
        ┌──────────────────────────────────┐  ┌S51       │
        │  TRANSMISSION OF SEARCH INFORMATION│              │
        └──────────────────────────────────┘              │
                        |<────────────────────────────────┘
                        v
                   /‾‾‾‾‾‾‾‾‾‾\  ┌S52
        NO        /  IS PROCESS  \
       ┌─────────< TERMINATED WITH RESPECT TO ALL GW >
       │          \   DEVICES?   /
       │           _____/
       │                | YES
       │                v
       │           /‾‾‾‾‾‾‾‾‾‾\  ┌S53
       │          /  IS SEARCH   \
       │         / RESULT INFORMATION ACQUIRED \       NO
       │        < FROM ALL GW DEVICES TO WHICH  >──────┐
       │         \  SEARCH INFORMATION IS      /        │
       │          \   TRANSMITTED?   /                  │
       │           _____/                         │
       │                | YES                           │
       │                v                               │
       │  ┌──────────────────────────────────┐  ┌S54     │
       │  │  OUTPUTTING OF ALTERNATIVE        │           │
       │  │    RESULT INFORMATION             │           │
       │  └──────────────────────────────────┘           │
       │                |                                │
       │                v                                │
       │            ( END )                              │
       └─────────────────────────────────────────────────┘
```

# FIG. 15

START

S1
IS END
DEVICE THAT BECOMES
UPDATE OBJECT
INCLUDED?

NO

YES

S10
SLEEP

S4
IS
UPDATE EXECUTION
POSSIBLE?

NO

YES

S5
TRANSMISSION OF UPDATE
INFORMATION REQUEST INFORMATION

S6
IS
UPDATE INFORMATION
RECEIVED?

NO

YES

A

B

# FIG. 16

(A)

**S30** — IS UPDATE OBJECT DEVICE PROVIDING FUNCTION? — NO

↓ YES

**S32** — TRANSMISSION OF SWITCHING REQUEST INFORMATION TO ALTERNATIVE DEVICE

**S33** — IS SWITCHING COMPLETION INFORMATION RECEIVED? — NO

↓ YES

**S34** — OUTPUTTING OF UPDATE EXECUTION REQUEST INFORMATION

**S36** — DOES ALTERNATIVE DEVICE GET OUT OF COMMUNICATION RANGE DURING UPDATE? — YES

**S38** — OUTPUT UPDATE STOPPING REQUEST INFORMATION

↓ NO

(B)

END

# FIG. 17

# FIG. 18

DETERMINATION PROCESS AS OUT OF
COMMUNICATION AVAILABLE RANGE

S100

IS UPDATE
TIME INFORMATION
RECEIVED?

NO

YES

S102

ACQUISITION OF END DEVICE
INFORMATION OF ALTERNATIVE DEVICE

S104

$T_{UR} < x_R/v_T$?

NO

YES

S106

IS UPDATE
TERMINATION INFORMATION
RECEIVED?

NO

YES

RETURN NO

RETURN YES

# FIG. 19

START

S60
ACQUISITION OF END DEVICE INFORMATION
OF ALTERNATIVE DEVICE CANDIDATE

S61
DOES
ALTERNATIVE DEVICE
CANDIDATE ENTER COMMUNICATION
RANGE AFTER t
SECONDS? — NO

YES

S62
DOES
ALTERNATIVE DEVICE
CANDIDATE GET OUT OF COMMUNICATION
RANGE DURING
UPDATE? — NO

YES

S64
IS ALTERNATIVE
DEVICE CANDIDATE NOT IN
UPDATE? — NO

YES

S66
IS ALTERNATIVE
DEVICE CANDIDATE
USABLE? — NO

YES

S68
RECOGNITION AS ALTERNATIVE DEVICE

S70
OUTPUTTING OF RESULT

END

# FIG. 20

```
                    START

                                        ── E

                            ─ S72
        BROADCAST DEVICE ID REQUEST


                            ─ S73
              HAS
    PREDETERMINED PERIOD OF TIME      NO
           PASSED?

              │ YES
                    ─ S74
         RECEIVE DEVICE ID      NO        ── D

              │ YES
                            ─ S76
    DETERMINE DEVICE ID THAT BECOMES OBJECT


                    ─ S78
              DOES
       ENTRY OF RECEIVED         NO
       DEVICE ID EXIST IN
             LIST?

          │ YES                              │
                  ─ S80                           ─ S84
  TRANSMIT POSITION INFORMATION REQUEST    TRANSMIT DETAILED
                                           INFORMATION REQUEST

                  ─ S81                           ─ S85
  NO      IS INFORMATION               RECEIVE DETAILED      NO
       UPDATE INFORMATION              INFORMATION
          RECEIVED?

          │ YES                          │ YES
                  ─ S82                           ─ S86
    UPDATE INFORMATION OF ENTRY          ADDITION OF ENTRY


                                  ─ S88
                            IS
                         PROCESS
                    TERMINATED WITH        NO
                       RESPECT TO
                       ALL DEVICE
                          IDs?

                          │ YES
                            C
```

# FIG. 21

```
                    ( C )
                      │
                      ▼
              DOES              ╱─S89
         DEVICE ID OTHER THAN         NO
     ◇ ACQUIRED DEVICE ID EXIST ◇─────────┐
              IN LIST?                     │
                      │                    │
                    YES                    │
                      │      ╱─S90         │
                      ▼                    │
         ┌──────────────────────┐         │
         │   DELETION OF ENTRY   │         │
         └──────────────────────┘         │
                      │◄──────────────────┘
                      │           ╱─S92
                      ▼
      ┌─────────────────────────────────────┐
      │ OUTPUT DEVICE INFORMATION TO GLOBAL  │
      │   DEVICE MANAGEMENT APPARATUS        │
      └─────────────────────────────────────┘
   ( D )───────────────►│◄───────────┐
                        │            │
                        ▼   ╱─S94    │
                  HAS                │ NO
         ◇ PREDETERMINED PERIOD OF TIME ◇────┘
                  PASSED?
                        │
                      YES
                        │
                        ▼
                     ( E )
```

# FIG. 22

```
            ┌──────────┐
            │  START   │
            └────┬─────┘
                 │                      ┌S125
        ┌────────▼──────────────────────────┐
        │  STOPPING OF FUNCTION PROVISION    │
        └────────┬──────────────────────────┘
                 │                      ┌S126
        ┌────────▼──────────────────────────┐
        │      EXECUTION OF UPDATE           │
        └────────┬──────────────────────────┘
                 │                      ┌S128
        ┌────────▼──────────────────────────┐
        │    TRANSMISSION OF UPDATE          │
        │      TIME INFORMATION              │
        └────────┬──────────────────────────┘
                 │              ┌S130
              ◇──▼──────────────◇          YES
              <   IS UPDATE      >───────────────┐
              < STOPPING REQUEST >               │
              < INFORMATION      >               │
              <   RECEIVED?      >               │
              ◇──────┬───────────◇               │     ┌S136
                    │NO                  ┌────────▼─────────┐
                    │       ┌S132        │ STOPPING OF UPDATE│
       NO     ◇─────▼────────◇           └────────┬─────────┘
       ┌──────< IS UPDATE    >                    │     ┌S138
       │      < TERMINATED?   >          ┌────────▼─────────┐
       │      ◇──────┬────────◇          │  RESUMPTION OF   │
       │            │YES                 │ FUNCTION PROVISION│
       │            │        ┌S134       └────────┬─────────┘
       │   ┌────────▼──────────────────┐          │
       │   │   TRANSMISSION OF UPDATE   │          │
       │   │   TERMINATION INFORMATION  │          │
       │   └────────┬──────────────────┘          │
       │            │                             │
       │            ▼◄────────────────────────────┘
       │       ┌─────────┐
       │       │   END   │
       │       └─────────┘
```

# FIG. 23

# FIG. 24

96

| NO. | GW DEVICE ID | END DEVICE ID |
|---|---|---|
| 1 | 001 | 103 |
| 2 | ... | ... |
| 3 | ... | ... |
| 4 | ... | ... |
| ... | ... | ... |

EP 3 115 889 A1

# FIG. 25

55

# FIG. 26

START

INITIALIZATION OF UPDATE OBJECT LIST — S150

DETERMINE GW DEVICE THAT BECOMES PROCESSING OBJECT — S152

S154
DOES END DEVICE OF UPDATE OBJECT EXIST?
NO
YES

UPDATE OF UPDATE OBJECT LIST — S156

S158
IS PROCESS TERMINATED WITH RESPECT TO ALL GW DEVICES?
NO
YES

TRANSMIT UPDATE REQUEST INFORMATION TO GW DEVICE THAT BECOMES OBJECT — S160

END

FIG. 27

START

SPECIFY UPDATE OBJECT — S161

IS UPDATE EXECUTION POSSIBLE? — S4

NO → SLEEP — S10

YES

TRANSMISSION OF UPDATE INFORMATION REQUEST INFORMATION — S5

IS UPDATE INFORMATION RECEIVED? — S6

NO

YES

IS UPDATE OBJECT DEVICE PROVIDING FUNCTION? — S30

NO

YES

TRANSMISSION OF SWITCHING REQUEST INFORMATION TO ALTERNATIVE DEVICE — S32

IS SWITCHING COMPLETION INFORMATION RECEIVED? — S33

NO

YES

OUTPUTTING OF UPDATE EXECUTION REQUEST INFORMATION — S34

DOES ALTERNATIVE DEVICE GET OUT OF COMMUNICATION RANGE DURING UPDATE? — S36

YES → OUTPUT UPDATE STOPPING REQUEST INFORMATION — S38

NO

END

57

## FIG. 28

UPDATE
INFORMATION

RESULT
INFORMATION

SWITCHING
COMPLETION
INFORMATION

ALTERNATIVE
SEARCH
INFORMATION

SWITCHING REQUEST
INFORMATION

DEVICE
INFORMATION

122

125

ALTERNATIVE
SEARCH UNIT

12

UPDATE
REQUEST UNIT

10

STORAGE UNIT

123

INFORMATION
MANAGEMENT UNIT

14

SEARCH UNIT

UPDATE
INFORMATION
REQUEST
INFORMATION

UPDATE REQUEST
INFORMATION

UPDATE INFORMATION

# FIG. 29

## FIG. 30

UPDATE REQUEST
INFORMATION

DEVICE ID
DEVICE INFORMATION

124

UPDATE
INFORMATION
REQUEST
INFORMATION

UPDATE
INFORMATION

ALTERNATIVE SEARCH
INFORMATION

127

UPDATE
EXECUTION
DETERMINATION
UNIT

15

STORAGE UNIT

16

INFORMATION
MANAGEMENT UNIT

INFORMATION
REQUEST
INFORMATION
POSITION UPDATE
INFORMATION
DETAILED
INFORMATION

RESULT
INFORMATION

128

DEVICE
SWITCHING UNIT

DEVICE INFORMATION

SWITCHING COMPLETION
INFORMATION

SWITCHING REQUEST
INFORMATION

# FIG. 31

SWITCHING REQUEST
INFORMATION

INFORMATION REQUEST
INFORMATION

126

22

SWITCHING UNIT

20

INFORMATION
MANAGEMENT UNIT

RESULT INFORMATION

POSITION UPDATE INFORMATION
DETAILED INFORMATION
DEVICE ID

# FIG. 32

```
            ┌──────────┐
            │  START   │
            └────┬─────┘
                 │
                 ▼          ⌐S200
          ╱DOES END  ╲
        ╱DEVICE INFORMATION╲        NO
       ╱CORRESPONDING TO ALL ╲──────────────┐
        ╲  DEVICE IDs  ╱                     │
          ╲  EXIST? ╱                        │
                 │ YES                       │
                 ▼          ⌐S202            │
      ┌────────────────────────┐            │
      │    SPECIFICATION OF     │            │
      │  ALTERNATIVE GW DEVICE  │            │
      └──────────┬─────────────┘            │
                 │          ⌐S204            │
      ┌────────────────────────┐            │
      │ TRANSMISSION OF SWITCHING│            │
      │   REQUEST INFORMATION   │            │
      └──────────┬─────────────┘            │
                 │◄───────────────┐          │
                 ▼          ⌐S206  │          │
          ╱  ARE ALL  ╲           │          │
        ╱PIECES OF SWITCHING╲  NO  │          │
       ╱COMPLETION INFORMATION╲────┘          │
        ╲  RECEIVED?  ╱                       │
                 │ YES                        ▼          ⌐S210
                 ▼          ⌐S208   ┌──────────────────┐
   ┌────────────────────────┐      │   OUTPUTTING OF  │
   │ OUTPUTTING OF UPDATE-POSSIBLE │ │ UPDATE-IMPOSSIBLE │
   │   RESULT INFORMATION   │      │ RESULT INFORMATION│
   └──────────┬─────────────┘      └────────┬─────────┘
              │◄───────────────────────────┘
              ▼
         ┌──────────┐
         │   END    │
         └──────────┘
```

# FIG. 33

START

S110
IS INFORMATION UPDATE INFORMATION RECEIVED? — NO

YES — S112
UPDATE OF ENTRY

S113
IS NEW ADDITIONAL INFORMATION RECEIVED? — NO

YES — S114
ADDITION OF ENTRY

S212
IS DELETION INFORMATION RECEIVED? — NO

YES — S115
DELETION OF ENTRY

S214
UPDATE OF ENTRY

END

# FIG. 34

```
                    START

                     │
                     ▼        S216
                  ╱UPDATE ╲      NO
                 ╱ OBJECT? ╲──────────────────────┐
                 ╲         ╱                        │
                  ╲       ╱                         │
                    YES ◄──────────────┐            │
                     │          S221    │           │
                     ▼               ┌──────┐        │
                  ╱   IS   ╲   S217  │SLEEP │        │
                 ╱ UPDATE    ╲   NO  └──────┘        │
                ╱ EXECUTION   ╲──────────┘           │
                ╲ POSSIBLE?  ╱                       │
                  ╲        ╱                         │
                    YES                              │
                     │                               │
                     ▼              S5               │
        ┌──────────────────────────────┐            │
        │  TRANSMISSION OF UPDATE       │            │
        │ INFORMATION REQUEST INFORMATION│           │
        └──────────────────────────────┘            │
                     │                               │
                     ▼ ◄──────────────────┐          │
                  ╱   IS   ╲   S6          │          │
                 ╱  UPDATE   ╲     NO       │          │
                ╱ INFORMATION ╲────────────┘          │
                ╲ RECEIVED?  ╱                        │
                  ╲        ╱                          │
                    YES                               │
                     │              S218              │
                     ▼                                │
        ┌──────────────────────────────┐             │
        │     EXECUTION OF UPDATE        │            │
        └──────────────────────────────┘             │
                     │                                │
                     ▼ ◄──────────────────┐           │
                  ╱ IS UPDATE ╲  S219  NO  │           │
                 ╱ TERMINATED? ╲──────────┘           │
                  ╲          ╱                         │
                    YES                                │
                     │              S220               │
                     ▼                                 │
        ┌──────────────────────────────┐              │
        │   TRANSMISSION OF INFORMATION  │             │
        │ UPDATE INFORMATION OF GW DEVICE│             │
        └──────────────────────────────┘              │
                     │ ◄───────────────────────────────┘
                     ▼
                    END
```

# FIG. 35

```
      ┌─────────────────────────────────────┐
      │  PROCESS OF DETERMINING WHETHER      │
      │ OR NOT UPDATE EXECUTION IS POSSIBLE  │
      └─────────────────────────────────────┘
                      │
                      ▼                 ┌─S230
      ┌─────────────────────────────────────┐
      │   TRANSMISSION OF ALTERNATIVE        │
      │       SEARCH INFORMATION             │
      └─────────────────────────────────────┘
                      │              ◄────────┐
                      ▼        ┌─S232         │
                   ╱        ╲                 │
                  ╱ IS RESULT ╲    NO          │
                 ╱ INFORMATION  ╲─────────────┘
                  ╲ RECEIVED?  ╱
                   ╲        ╱
                      │ YES
                      ▼        ┌─S234
                   ╱        ╲
                  ╱ UPDATE-    ╲   NO
                 ╱  POSSIBLE     ╲──────────┐
                  ╲ RESULT       ╱          │
                   ╲INFORMATION?╱           │
                      │ YES                 │
                      ▼                     ▼
               ( RETURN YES )        ( RETURN NO )
```

## FIG. 36

# FIG. 37

98

| NO. | GW DEVICE ID |
|-----|--------------|
| 1 | 001 |
| 2 | ... |
| 3 | ... |
| 4 | ... |
| ... | ... |

## FIG. 38

UPDATE REQUEST
INFORMATION

DEVICE ID
DEVICE INFORMATION

134

UPDATE
INFORMATION
REQUEST
INFORMATION

UPDATE
INFORMATION

ALTERNATIVE SEARCH
INFORMATION

138

UPDATE
EXECUTION
DETERMINATION
UNIT

RESULT
INFORMATION

15

STORAGE UNIT

16

INFORMATION
MANAGEMENT UNIT

INFORMATION
REQUEST
INFORMATION
POSITION UPDATE
INFORMATION
DETAILED
INFORMATION

128

DEVICE
SWITCHING UNIT

DEVICE INFORMATION

SWITCHING COMPLETION
INFORMATION

SWITCHING REQUEST
INFORMATION

# FIG. 39

```
                    ┌─────────────┐
                    │    START    │
                    └──────┬──────┘
                           │              ┌S240
                           ▼
         ┌─────────────────────────────────────┐
         │  INITIALIZATION OF UPDATE OBJECT LIST │
         └─────────────────┬───────────────────┘
                           │              ┌S242
                           ▼
         ┌─────────────────────────────────────┐
         │   DETERMINE GW DEVICE INFORMATION    │
         │   THAT BECOMES PROCESSING OBJECT     │
         └─────────────────┬───────────────────┘
                           │              ┌S244
              NO           ▼
         ◄──────────────╱ UPDATE ╲
                        ╲ OBJECT? ╱
                           │ YES
                           │              ┌S246
                           ▼
         ┌─────────────────────────────────────┐
         │     UPDATING OF UPDATE OBJECT LIST    │
         └─────────────────┬───────────────────┘
                           ▼              ┌S248
                    ╱  IS PROCESS  ╲
                   ╱ TERMINATED WITH ╲      NO
                  ╱  RESPECT TO ALL   ╲─────────
                  ╲ PIECES OF GW DEVICE╱
                   ╲   INFORMATION?   ╱
                           │ YES
                           │              ┌S250
                           ▼
         ┌─────────────────────────────────────┐
         │  TRANSMIT UPDATE REQUEST INFORMATION │
         │   TO GW DEVICE THAT BECOMES OBJECT   │
         └─────────────────┬───────────────────┘
                           ▼
                    ┌─────────────┐
                    │     END     │
                    └─────────────┘
```

# FIG. 40

```
                    START                    ⟋S221
                      │                  ┌─────────┐
                      │◄─────────────────│  SLEEP  │
                      ▼       ⟋S217       └─────────┘
                   ╱  IS  ╲         NO        ▲
                 ╱ UPDATE   ╲─────────────────┘
                 ╲EXECUTION ╱
                   ╲POSSIBLE?╱
                      │ YES
                      ▼              ⟋S5
        ┌──────────────────────────────────┐
        │     TRANSMISSION OF UPDATE        │
        │ INFORMATION REQUEST INFORMATION   │
        └──────────────────────────────────┘
                      │◄──────────────────┐
                      ▼       ⟋S6          │
                   ╱  IS  ╲         NO     │
                 ╱ UPDATE   ╲──────────────┘
                 ╲INFORMATION╱
                 ╲ RECEIVED? ╱
                      │ YES
                      ▼              ⟋S218
        ┌──────────────────────────────────┐
        │       EXECUTION OF UPDATE         │
        └──────────────────────────────────┘
                      │◄──────────────────┐
                      ▼       ⟋S219        │
                   ╱        ╲       NO     │
                 ╱ IS UPDATE  ╲────────────┘
                 ╲TERMINATED? ╱
                      │ YES
                      ▼              ⟋S220
        ┌──────────────────────────────────┐
        │   TRANSMISSION OF INFORMATION     │
        │ UPDATE INFORMATION OF GW DEVICE   │
        └──────────────────────────────────┘
                      │
                      ▼
                    END
```

Europäisches
Patentamt

European
Patent Office

Office européen
des brevets

## EUROPEAN SEARCH REPORT

Application Number

EP 16 17 6613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/067258 A1 (TRILLIANT NETWORKS INC [US]; VEILLETTE MICHEL [CA]; LEBLANC PATRICK [C) 28 May 2009 (2009-05-28) * abstract * * claims 1-2,4,6,8,10-11,13,16-17 * * figures 1-3,8 * ----- | 1-8 | INV. G06F9/445 |
| X | WO 2014/082558 A1 (TENCENT TECH SHENZHEN CO LTD [CN]) 5 June 2014 (2014-06-05) * claims 9-13 * * figures 1,5,8 * ----- | 1-8 | |

TECHNICAL FIELDS
SEARCHED        (IPC)

G06F

The present search report has been drawn up for all claims

| Place of search | Date of completion of the search | Examiner |
|---|---|---|
| Munich | 25 November 2016 | Steinmetz, Christof |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 17 6613

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2016

| Patent document cited in search report | | Publication date | Patent family member(s) | | Publication date |
|---|---|---|---|---|---|
| WO 2009067258 | A1 | 28-05-2009 | CA | 2705191 A1 | 28-05-2009 |
| | | | EP | 2215545 A1 | 11-08-2010 |
| | | | US | 2009138866 A1 | 28-05-2009 |
| | | | WO | 2009067258 A1 | 28-05-2009 |
| WO 2014082558 | A1 | 05-06-2014 | CN | 103840963 A | 04-06-2014 |
| | | | TW | 201421257 A | 01-06-2014 |
| | | | US | 2014228129 A1 | 14-08-2014 |
| | | | WO | 2014082558 A1 | 05-06-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004234056 A

- JP 2014071907 A